# EUROPÄISCHE PATENTANMELDUNG

(11) **EP 3 813 315 A1**
(43) Veröffentlichungstag der Anmeldung: **28.04.2021**
(21) Anmeldenummer: 19204976.5
(22) Anmeldetag: 24.10.2019
(51) Int. Cl.: H04L 29/06, H04L 12/26

(54) **VERFAHREN ZUR DIAGNOSE DES DATENVERKEHRS, VERFAHREN ZUM ERMITTELN EINER KONFIGURATION, CLUSTER, COMPUTERPROGRAMM UND COMPUTERLESBARES MEDIUM**

(71) Anmelder: Siemens Aktiengesellschaft, 80333 München (DE)
(72) Erfinder: Albrecht, Harald, 90475 Nürnberg (DE); Höme, Stephan, 91126 Schwabach (DE); Talanis, Thomas, 91336 Heroldsbach (DE)

(57) **Zusammenfassung**

Die Erfindung betrifft ein Verfahren zur Diagnose des Datenverkehrs in einem Cluster (1) mit mehreren Arbeitsknoten (2), wobei auf einem oder mehreren der Knoten (2) jeweils einer oder mehrere Container (3) und/oder Pods (7) vorhanden sind, und wobei einem oder mehreren der Knoten (2) jeweils ein Knoten-Erfassungsmodul (6) und dem Cluster (1) ein Cluster-Erfassungsmodul (4) zugeordnet ist, bei dem
a) das Cluster-Erfassungsmodul (4) Informationen darüber erhält, welchen der Knoten (2) jeweils ein Knoten-Erfassungsmodul (6) zugeordnet ist,
b) das Cluster-Erfassungsmodul (4) von einem anfragenden Modul (9) eine Anfrage für das Erfassen von Datenpaketen erhält,
c) das Cluster-Erfassungsmodul (4) das Knoten-Erfassungsmodul (6) des wenigstens einen betroffenen Knotens (2) kontaktiert und das Knoten-Erfassungsmodul (6) Datenpakete erfasst,
d) das Knoten-Erfassungsmodul (6) des wenigstens einen betroffenen Knotens (2) die erfassten Datenpakete bzw. Duplikate (18) dieser an das Cluster-Erfassungsmodul (4) weiterleitet, und
e) das Cluster-Erfassungsmodul (4) die erfassten Datenpakete bzw. Duplikate (18) dieser an das anfragende Modul (9) weiterleitet.

Darüber hinaus betrifft die Erfindung ein Verfahren zum Ermitteln einer Konfiguration, einen Cluster (1), ein Computerprogramm und ein computerlesbares Medium.

## Beschreibung

Die Erfindung betrifft ein Verfahren zur Diagnose des Datenverkehrs in einem insbesondere industriellen Cluster mit mehreren Arbeitsknoten. Darüber hinaus betrifft die Erfindung ein Verfahren zum Ermitteln einer Konfiguration eines oder mehrerer Arbeitsknoten eines insbesondere industriellen Clusters, einen Cluster, ein Computerprogramm und ein computerlesbares Medium.

Im Bereich der allgemeinen IT hat sich die so genannte Container-Technologie bewährt. Container, die auch als Anwendungs- bzw. Software-Container bezeichnet werden können, stellen in der Regel "abgekapselte" Einheiten dar, die unabhängig voneinander ausgeführt werden können, egal wo sie sich befinden. Ähnlich wie bei virtuellen Maschinen (abgekürzt VMs) sind Container eine Art Behälter für Anwendungen, in denen diese laufen können. Während virtuelle Maschinen jedoch eine ganze Computerumgebung abbilden, enthalten die Container üblicherweise lediglich die wichtigen Daten, die für die Ausführung der jeweiligen Anwendung bzw. Anwendungen benötigt werden.

Die Container-Technologien bzw. die Containerisierung ermöglichen es insbesondere, eine Software bzw. Anwendung in einem Container zu verpacken, der alles umfasst, was sie zum Laufen braucht, beispielsweise Programmcode, Laufzeit, System-Tools und/oder Systembibliotheken. Die Container-Technologien bzw. Funktionen können einfach und bequem modular verpackt, transportiert und schließlich in den operativen Bereich ausgerollt werden. Container erlauben somit einen flexiblen Transport und Einsatz modularer Software in Form eigenständig ablauffähiger Bausteine ohne Abhängigkeiten zu den Software-Bibliotheken des ausführenden Betriebssystems. Klassische Einsatzgebiete von Containern liegen beispielsweise darin Applikationen, etwa eine Datenbank oder einen Web-Front-End, bequem zu verpacken.

Die positiven Eigenschaften können nach Ansicht der Anmelderin aber z.B. auch vorteilhaft in industriellen Produktionsumgebungen eingesetzt werden.

Beispiele für Software für die Container-Virtualisierung/Containerisierung sind etwa "Docker" oder "rkt" (gesprochen "rocket", siehe etwa https://coreos.com/rkt/sowie https://www.docker.com bzw. EP 3 267 351 A1 zu Docker).

Nach Auffassung der Anmelderin entwickelt sich der Schwerpunkt des Anwenderinteresses vom einzelnen Container auf einem einzelnen System, z.B. einem einzelnen Industrie-PC oder auch einer einzelnen VM, hin zu verteilten Applikationen in industriellen Clustern.

Die allgemeine IT stellt heute eine Reihe von Mechanismen bereit, um in einem Cluster mit Arbeitsrechnern, die auch als Arbeitsknoten bezeichnet werden, die benötigten Arbeitslasten für Applikationen insbesondere in Form von Containern auf die vorhandenen Knoten zu verteilen. Die Arbeitsknoten eines Clusters können räumlich verteilt angeordnet sein. Es sind (Container-)Orchestrierungs-Systeme, wie etwa Kubernetes (siehe etwa https://kubernetes.io/ sowie https://de.wikipedia.org/wiki/Kubernetes) für Cluster mit Arbeitsknoten bekannt.

Mit Orchestrierungs-Systemen wie Kubernetes können insbesondere sogenannte "Pods" orchestriert werden, welche die kleinste einsetzbare Einheit darstellen. Ein Pod beinhaltet wenigstens einen Container. Pods sind insbesondere Arbeiterprozesse, die auf "Nodes" (Arbeitsknoten/Knoten/Arbeitsrechner eines Clusters, Begriffe werden vorliegen synonym verwendet) laufen.

Cluster-Management- und -Orchestrierungssysteme können Anwender von lästigen Details wie dem Zuordnen von Containern zu Cluster-Rechnern, automatischen Neustarts nach Störungen, kontrollierten Updaten von Containern, Lastverteilung, und anderem entlasten.

Eine Eigenschaft von industriellen Clustern ist oftmals, dass ein Teil der darin ablaufenden Applikationen mit der existierenden heutigen "klassischen" Gerätewelt der Automatisierungstechnik kommunizieren muss. Insbesondere ist die Automatisierungswelt heute im Gegensatz zu typischen IT-Cluster-Applikationen immer noch durch eine große Vielzahl spezieller Kommunikationsprotokolle auf IP- oder sogar Ethernet-Ebene gekennzeichnet. Kommt es zu Kommunikationsproblemen zwischen solchen Automatisierungs-Containern, welche solche speziellen Kommunikationsprotokolle nutzen, oder zwischen Containern und den heutigen Automatisierungsgeräten, dann werden Diagnosewerkzeuge für die Kommunikation bis hinunter zu den IP- und Ethernet-Schichten benötigt.

Die bisherigen Werkzeuge, etwa Netzwerkpakete-Aufzeichnungswerkzeuge, die auch als Capture-Werkzeuge bzw. -Tools bezeichnet werden (z.B. Wireshark, siehe beispielsweise https://www.wireshark.org/ und https://de.wikipedia.org/wiki/Wireshark), entstammen dabei ursprünglich aus einer nicht oder nur wenig virtualisierten Einzelsystem-Welt.

Nach Auffassung der Anmelderin werden sowohl Anwender als auch Entwickler von containerisierten und geclusterten Automatisierungslösungen einen kontrollierten und vereinfachten Zugriff auf die "lebendigen" Netzwerk-Pakete in solchen Clustern benötigen. Dabei sollen Anwender und Entwickler hierfür nicht erst detailliertes Fachwissen über die virtuellen Kommunikationsstrukturen in Clustern erarbeiten müssen. Ebenso wenig sollen sie mittels spezieller Terminalverbindungen in den Unterbau eines Clustersystems einsteigen müssen. Vielmehr besteht Bedarf an einem kontrollierten Zugang zu aktuellen Netzwerk-Paketdaten insbesondere als Service, der sich gleichzeitig in natürlicher Weise in die heute üblichen Zugangs- und Sicherungsmechanismen von Clustersystemen integriert.

Weiterhin sollte das Erfassen von Netzwerk-Paketen einfach mit den Applikationen aus der Cluster-Sicht korrelierbar sein, also beispielsweise mit der Abstraktionsebenen von Containern und Container-Gruppen (beispielsweise Pods). Schließlich sollte das Erfassen und die Zuordnung zur Cluster-Container-Welt möglichst als Microservice ausgestaltet sein, um auf diese Weise auch weitere (Diagnose-) Anwendungen auf einfache Weise den Zugang zu möglichst frischen Netzwerk-Paketen zu erlauben. Besonders vorteilhaft wäre aus Sicht der Anmelderin, eine Möglichkeit zu schaffen, dass existierende Analysetools Cluster-fähig werden.

Die bekannten Tools, insbesondere Wireshark, sind zwar grundsätzlich auch in Clustern und einer containerisierten Welt einsetzbar. Aus Sicht der Anmelderin bestehen jedoch Nachteile.

Der Anmelderin ist bekannt, dass Programme für den Mitschnitt und das Darstellen von Netzwerk-Paketen, wie Wireshark, mitunter nicht nur das Erfassen von Netzwerk-Paketen an lokalen Netzwerk-Schnittstellen unterstützen, sondern auch auf entfernten Rechnern. Dazu wird beispielsweise eine gesicherte SSH-Verbindung ("Secure Shell") zwischen einem Rechner mit einer Wireshark-Installation und einem entfernten Rechner aufgebaut. Danach wird auf dem entfernten Rechner ein Hilfsprogramm (wie tcpdump oder udpdump) gestartet, so dass dort Netzwerk-Pakete erfasst und über die SSH-Verbindung an das Frontend in Form beispielsweise von Wireshark zur Präsentation, Analyse und Sicherung geschickt. Weiterhin kann die Paketaufzeichnung auch lokal erfolgen, wobei die Aufzeichnung auf speziell den Containern bereitgestellte externe Speicher übertragen werden. Erst nach dem Beenden dieser Aufzeichnungen können die Paketdaten dann vom externen Analysewerkzeug von den externen Speichern ausgelesen und ausgewertet werden.

Als teilweise nachteilig an diesen Lösungen ist aus Sicht der Anmelderin u.a. die fehlende Verknüpfung mit den virtualisierten IP-Stacks von Containern, so dass der Anwender/Entwickler in der Regel über detailliertes Wissen verfügen muss, wie er den richtigen virtuellen IP-Stack zu einem bestimmten Container lokalisiert und dann nur genau dort das Erfassen von Paketen korrekt startet.

Eine Alternative könnte darin bestehen, eine Capture-Software in die zu diagnostizierenden Container hinein zu installieren und einen Aufbau von SSH-Sitzungen zu solchen Containern durchzuführen. Der vom Anwendungsentwickler verantwortete und bereitgestellte Container muss dann jedoch um die erforderliche Capture-Software erweitert werden. Die Capture-Software besteht oftmals nicht nur aus einer einzelnen Binärdatei, sondern benötigt weitere "shared libraries", wie beispielsweise "glibc", und ist damit nicht mehr autark. Container werden oftmals mit möglichst wenig "Infrastruktur" in Form von shared libraries ausgestattet. Auch wird mitunter eine abweichende Infrastruktur wie "musl" (siehe etwa https://www.musl-libc.org/) im Fall von Alpine-Linuxbasierten Containern anstatt glibc genutzt. Dann können Inkompatibilitäten auftreten, so dass die Capture-Software nicht mehr funktioniert.

Weiterhin dürfte es nach Auffassung der Anmelderin aus Gründen der Sicherheit eher nachteilig sein, eigentlich nur für Tests und Diagnose benötigte und vergleichsweise mächtige Capture-Software in Applikations-Container mit einzupacken. Solche Software kann von Angreifern potenziell als Sprungbrett in das anzugreifende System um den Container herum missbraucht werden.

Ein weiterer Nachteil an bekannten Lösungen liegt nach Auffassung der Anmelderin darin, dass ein spezieller Terminalzugang (SSH) in den Cluster hinein sowie zwischen den Arbeitsknoten des Clusters beziehungsweise Container benötigt wird. Dieser Terminalzugang ist dabei nicht in die Benutzer- und Rollenverwaltung des Clusters integriert, sondern davon vollständig getrennt.

Auch werden speziell bereitgestellte externe Datenspeicher für den offline-Transfer benötigt. Eine Live-Diagnose ist damit derzeit nicht möglich. Zudem müssen Container speziell für die Aufzeichnungen angepasst und neugestartet werden.

Ausgehend davon ist es eine Aufgabe der vorliegenden Erfindung eine Möglichkeit zu schaffen, den Datenverkehr in einem insbesondere industriellen Cluster zu diagnostizieren, wobei die vorgenannten Nachteile vermieden oder zumindest reduziert werden.

Diese Aufgabe wird gelöst durch ein Verfahren zur Diagnose des Datenverkehrs in einem insbesondere industriellen Cluster mit mehreren Arbeitsknoten, wobei auf einem oder mehreren der Knoten jeweils einer oder mehrere Container und/oder Pods vorhanden sind, und wobei einem oder mehreren der Knoten jeweils ein Knoten-Erfassungsmodul und dem Cluster ein Cluster-Erfassungsmodul zugeordnet ist, bei dem
a) das Cluster-Erfassungsmodul Informationen darüber erhält oder erhalten hat, welchen der Knoten ein Knoten-Erfassungsmodul zugeordnet ist, und welche Netzwerk-Stacks der oder der jeweilige dieser Knoten aufweist und welcher oder welche Container und/oder Pods auf dem oder dem jeweiligen dieser Knoten vorhanden sind, und, sofern vorhanden, welcher Container und/oder welcher Pod des oder des jeweiligen dieser Knoten welchem Netzwerk-Stack des oder des jeweiligen dieser Knoten zugeordnet ist,
b) das Cluster-Erfassungsmodul von einem anfragenden Modul eine Anfrage für das Erfassen von Datenpaketen an wenigstens einem Netzwerk-Stack und/oder in wenigstens einem Container und/oder Pod wenigstens eines dieser Knoten, betroffener Knoten, empfängt, wobei die Anfrage eine dem wenigstens einen Netzwerk-Stack zugeordnete Kennung und/oder eine dem wenigstens einen Container und/oder dem wenigstens einen Pod zugeordnete Kennung umfasst,
c) das Cluster-Erfassungsmodul das Knoten-Erfassungsmodul des wenigstens einen betroffenen Knotens kontaktiert und das Knoten-Erfassungsmodul Datenpakete an der oder den Netzwerkschnittstellen des wenigstens einen Netzwerk-Stacks, dessen Kennung in der Anfrage angegeben ist, erfasst, und/oder das Knoten-Erfassungsmodul Datenpakete an der oder den Netzwerkschnittstellen des wenigstens einen Netzwerk-Stacks, der dem wenigstens einen Container und/oder der dem wenigstens einen Pod, dessen Kennung in der Anfrage angegeben ist, zugeordnet ist, erfasst,
d) das Knoten-Erfassungsmodul des wenigstens einen betroffenen Knotens die erfassten Datenpakete bzw. Duplikate dieser an das Cluster-Erfassungsmodul weiterleitet, und
e) das Cluster-Erfassungsmodul die erfassten Datenpakete bzw. Duplikate dieser an das anfragende Modul weiterleitet.

Gegenstand der Erfindung ist auch ein Verfahren zum Ermitteln einer Konfiguration eines oder mehrerer Arbeitsknoten eines insbesondere industriellen Clusters, wobei auf einem oder mehreren der Arbeitsknoten jeweils einer oder mehrere Container vorhanden sind, wobei einem oder mehreren der Knoten jeweils ein Knoten-Discoverymodul und dem Cluster ein Cluster-Erfassungsmodul zugeordnet ist, bei dem
aa) das oder das jeweilige Knoten-Discoverymodul erfasst, welche Netzwerk-Stacks der oder der jeweilige Knoten aufweist und welche Netzwerkschnittstellen der oder der jeweilige Netzwerk-Stack hat und welche Container und/oder Pods auf dem oder dem jeweiligen Knoten vorhanden sind, und, sofern Container und/oder Pods vorhanden sind, welcher Container und/oder welcher Pod des oder des jeweiligen Knotens welchem Netzwerk-Stack des oder des jeweiligen Knotens zugeordnet ist,
bb) das Knoten-Erfassungsmodul des oder des jeweiligen Knotens dem Cluster-Erfassungsmodul diese Informationen bevorzugt auf Anfrage des Cluster-Erfassungsmoduls hin übermittelt.

In besonders bevorzugter Ausgestaltung des erfindungsgemäßen Verfahren zur Diagnose des Datenverkehrs erhält das Cluster-Erfassungsmodul die genannten Informationen in Schritt a) unter Durchführung des erfindungsgemäßen Verfahrens zum Ermitteln einer Konfiguration oder hat diese dadurch erhalten, besonders bevorzugt für mehrere, insbesondere alle Knoten. Eine bevorzugte Variante des erfindungsgemäßen Verfahrens zur Diagnose des Datenverkehrs in einem insbesondere industriellen Cluster zeichnet sich entsprechend dadurch aus, dass einem oder mehreren der Knoten jeweils ein Knoten-Erfassungsmodul und ein Knoten-Discoverymodul zugeordnet ist, und dass
a) das oder das jeweilige Knoten-Discoverymodul erfasst, welche Netzwerk-Stacks der oder der jeweilige Knoten aufweist und welche Netzwerkschnittstellen der oder der jeweilige Netzwerk-Stack (12) hat und welche Container und/oder Pods auf dem oder dem jeweiligen Knoten vorhanden sind, und, sofern Container und/oder Pods vorhanden sind, welcher Container und/oder welcher Pod des oder des jeweiligen Knotens welchem Netzwerk-Stack des oder des jeweiligen Knotens zugeordnet ist, und das Knoten-Erfassungsmodul des oder des jeweiligen Knotens dem Cluster-Erfassungsmodul diese Informationen bevorzugt auf Anfrage des Cluster-Erfassungsmoduls hin übermittelt,
b) das Cluster-Erfassungsmodul von einem anfragenden Modul eine Anfrage für das Erfassen von Datenpaketen an wenigstens einem Netzwerk-Stack und/oder in wenigstens einem Container und/oder Pod wenigstens eines dieser Knoten, betroffener Knoten, empfängt, wobei die Anfrage eine dem wenigstens einen Netzwerk-Stack zugeordnete Kennung und/oder eine dem wenigstens einen Container und/oder dem wenigstens einen Pod zugeordnete Kennung umfasst,
c) das Cluster-Erfassungsmodul das Knoten-Erfassungsmodul des wenigstens einen betroffenen Knotens kontaktiert und das Knoten-Erfassungsmodul Datenpakete an der oder den Netzwerkschnittstellen des wenigstens einen Netzwerk-Stacks, dessen Kennung in der Anfrage angegeben ist, erfasst, und/oder das Knoten-Erfassungsmodul Datenpakete an der oder den Netzwerkschnittstellen des wenigstens einen Netzwerk-Stacks, der dem wenigstens einen Container und/oder der dem wenigstens einen Pod, dessen Kennung in der Anfrage angegeben ist, zugeordnet ist, erfasst,
d) das Knoten-Erfassungsmodul des wenigstens einen betroffenen Knotens die erfassten Datenpakete bzw. Duplikate dieser an das Cluster-Erfassungsmodul weiterleitet, und
e) das Cluster-Erfassungsmodul die erfassten Datenpakete bzw. Duplikate dieser an das anfragende Modul weiterleitet.

Die vorliegende Erfindung erlaubt es insbesondere, dass klassische Werkzeuge zur Netzwerkanalyse- und -diagnose einen möglichst einfachen Zugang zum Mitschnitt von Netzwerk-Paketen in einem insbesondere industriellen Cluster erhalten. Dafür ist bzw. wird erfindungsgemäß der Cluster mit einem Cluster-Erfassungsservice und einer oder mehrere der Cluster-Arbeitsknoten mit einem Knoten-Erfassungsservice ausgestattet, die sozusagen über ein "Verständnis" für Container/Pods und deren Bezug zu virtuellen Netzwerk-, beispielsweise IP-Stacks verfügen. Der Cluster-Erfassungsservice wird dabei von dem Cluster-Erfassungsmodul und der oder die Knoten-Erfassungsservices von dem bzw. dem jeweiligen Knoten-Erfassungsmodul implementiert.

Der von dem Cluster-Erfassungsmodul bereitgestellte Cluster-weite Erfassungsdienst stellt bevorzugt eine für den Cluster zentrale Entität dar. Das Cluster-Erfassungsmodul ist in der Regel pro Cluster logisch einmal vorhanden. Es kann sein, dass es in aus dem Bereich der allgemeinen IT an sich vorbekannter Weise horizontal skaliert wird bzw. ist, indem es mehrfach (beispielsweise auch auf verschiedenen Arbeitsknoten) gleichzeitig implementiert ist bzw. ausgeführt wird. Dann kann ein vom Clustersystem vorgeschalteter Load Balancer automatisch dafür sorgen, dass eines oder mehrere anfragende Module insbesondere je nach Auslastung mit einem anderen der mehrfach ausgeführten Cluster-Erfassungsmodule verbunden wird bzw. werden.

Es ist möglich, dass unter Durchführung des erfindungsgemäßen Verfahrens der Datenverkehr an wenigstens einer Netzwerkschnittstelle erfasst wird, welche ein Kundennetzwerk anbindet, so dass der Datenverkehr, der in das bzw. aus dem Kundennetz kommt, beobachtet bzw. mitgeschnitten werden kann.

Das Cluster-Erfassungsmodul ist bevorzugt auf dem Cluster implementiert, beispielsweise auf einem Arbeitsknoten des Clusters. Im Falle der horizontalen Skalierung kann das Cluster-Erfassungsmodul (bzw. mehrere Versionen dieses) beispielsweise auch auf mehreren Arbeitsknoten implementiert sein.

Die Informationen, welche das Cluster-Erfassungsmodul in Schritt a) erhält bzw. welche das Cluster-Erfassungsmodul gemäß Schritt a) erhalten hat, umfassen bevorzugt auch, welche Netzwerkschnittstellen die Netzwerk-Stacks haben.

In den Informationen, welche das Cluster-Erfassungsmodul in Schritt a) erhält bzw. gemäß Schritt a) erhalten hat, sind die Netzwerk-Stacks der Knoten bevorzugt über wenigstens eine zugehörige Kennung aufgeführt. Als besonders geeignet hat es sich erwiesen, wenn als wenigstens eine Kennung die inode-Nummern der Netzwerk-Stacks der Knoten aufgeführt sind. Dies ist vorteilhaft, da die Lebensdauer eines Netzwerk-Stacks in der Regel über die Lebensdauer einzelner Prozesse hinausgeht, insbesondere innerhalb eines Containers je nach Anwendung oftmals eine Vielzahl nur kurzlebiger Prozesse existieren, so dass Prozesskennungen, etwa PIDs (Process Identifiers) weniger geeignet sind. Zu inode-Nummern (auch Inodenummern geschrieben) siehe beispielsweise https://de.wikipedia.org/wiki/Inode.

Weiterhin bevorzugt ermittelt das Knoten-Erfassungsmodul des oder des jeweiligen Knotens in Schritt aa) auch Kennungen, insbesondere Namen der von dem Knoten-Erfassungsmodul ermittelten Container und/oder Kennungen, insbesondere Namen der von dem Knoten-Erfassungsmodul ermittelten Pods und/oder Kennungen, insbesondere Namen der von dem Knoten-Erfassungsmodul ermittelten Netzwerk-Stacks.

Die Informationen, die das Cluster-Erfassungsmodul gemäß Schritt a) erhält, umfassen entsprechend bevorzugt Kennungen, insbesondere Namen der ermittelten Container und/oder der ermittelten Pods und/oder der ermittelten Netzwerk-Stacks.

Besonders bevorzugt handelt es sich, was Container und/oder Pods angeht, um Namen, welche den Containern bzw. Pods aus applikativer Sicht und/oder anwenderseitig gegeben wurden. Es kann sich bevorzugt um Namen handeln, welche von einer die Container verwaltenden Container-Engine verwendet werden. Netzwerk-Stacks, die von einem oder mehreren Prozesses genutzt werden, kann insbesondere der Namen eines dieser Prozesse zugeordnet sein bzw. von dem (jeweiligen) Knoten-Discoverymodul zugeordnet werden, besonders bevorzugt der Name desjenigen den Stack nutzenden Prozesses, der im Prozessbaum am weitesten oben steht. Was Netzwerk-Stacks angeht, die von keinem Prozess genutzt werden, sozusagen "Prozess-lose" Stacks, kann der Name desjenigen Dateisystem-Pfads zugeordnet sein bzw. vom Knoten-Discoverymodul zugeordnet werden, anhand dem der Netzwerk-Stack beim Durchsuchen aller Mount-Positionen des "nsfs"-Dateisystem auffindbar ist bzw. aufgefunden wurde ("bindmount").

Das Cluster-Erfassungsmodul kann insbesondere der Integration der einzelnen knotenspezifischen Services dienen. Es kann Anfragen für die Netzwerk-Paketerfassung und bevorzugt angeforderte Kommunikationskanäle für das Streaming von erfassten Netzwerk-Paketen bzw. zugehörigen Duplikaten auf die korrekten Knoten-Erfassungsmodule "durchschalten" oder darauf "umleiten" (HTTP redirect) und/oder die knotenspezifischen Informationen bevorzugt aller Knoten-Discoverymodule zu einem Gesamt-Informationsmodell aufbereiten.

Die Informationen, welche das Cluster-Erfassungsmodul in Schritt a) erhält bzw. gemäß Schritt a) erhalten hat, können auf dem Cluster-Erfassungsmodul zum Beispiel in wenigstens einer Datei abgelegt sein bzw. werden.

Ein Durchschalten kann beispielsweise wie von http Reverse Proxies bekannt erfolgen. Dabei kann anhand des vom Client bei der HTTP-Anfrage immer mit übertragenen URL Pfads das Cluster-Erfassungsmodul den gewünschten Knoten bestimmen. Damit erzeugt das Cluster-Erfassungsmodul bevorzugt auf der Basis der ursprünglichen Anfrage eine modifizierte HTTP-Anfrage, in der insbesondere der URL Pfad modifiziert ist, indem die infolge der Weiterleitung nicht mehr benötigten Pfadanteile entfernt sind. Insbesondere die zu entfernenden Pfadanteile enthalten die im Rahmen des Durchschaltens benötigten und danach nicht mehr benötigten Informationen. Weiterhin vom Client gesendeten Daten wie beispielsweise ein optionaler HTTP body werden zweckmäßiger Weise unverändert durchgeleitet. Die HTTP Antwort wird ebenso vom Erfassungsmodul an den Client zurückgeleitet, wobei wie bei HTTP Reverse Proxies häufig üblich kleinere Änderungen in den Kopfdaten der HTTP-Antwort vorgenommen werden können, beispielsweise um unerwünschte Proxy-Kopfinformationen wieder zu entfernen.

In der Regel werden, was den Mitschnitt von Paketen in Clustern angeht, zumindest die folgenden vier Anwendungsfälle auftreten können. Gewünscht sein kann beispielsweise der Mitschnitt von Netzwerkpaketen eines Pods, mit anderen Worten einer Gruppe von zwei oder mehr Containern. Alternativ oder zusätzlich kann der Mitschnitt von Paketen eines Einzelcontainers gewünscht sein, der insbesondere kein Teil einer Gruppe von Containern also keines Pods ist. Weiterhin kann es gewünscht oder erforderlich sein, die Pakete eines Netzwerk-Stacks zu erfassen, der weder von Containern noch von Container-Gruppen/Pods benutzt wird, aber von Prozessen außerhalb von Containern/Pods. Schließlich kann es - wiederum alternativ oder zusätzlich - gewünscht sein, ein Capture für einen Netzwerk-Stack durchzuführen, der weder von Containern/Pods noch (Container/Pod-unabhängigen) Prozessen benutzt wird.

So kann vorgesehen sein, dass das Cluster-Erfassungsmodul in Schritt b) eine Anfrage zum Erfassen von Datenpaketen an wenigstens einem Netzwerk-Stack erhält, und die Anfrage als die dem wenigstens einen Netzwerk-Stack zugeordnete Kennung einen Namen des wenigstens Netzwerk-Stacks oder eines den wenigstens einen Netzwerk-Stack nutzenden Prozesses enthält. Ist eine Kennung bzw. ein Name eines zugeordneten Prozesses angegeben, handelt es sich bevorzugt um die Kennung desjenigen Prozesses, der im Prozessbaum am weitesten oben steht. Wird eine Anfrage für einen Netzwerk-Stack ohne Prozess(e) gestellt, handelt es sich bei dem angegeben Stack-Namen bevorzugt um den Namen desjenigen Dateisystem-Pfads, anhand dem der Netzwerk-Stack beim Durchsuchen aller Mount-Positionen des "nsfs"-Dateisystem auffindbar ist bzw. aufgefunden wurde ("bindmount").

Alternativ oder zusätzlich kann das Cluster-Erfassungsmodul in Schritt b) eine Anfrage zum Erfassen von Datenpaketen in wenigstens einem Container und/oder wenigstens einem Pod erhalten, und die Anfrage als die dem wenigstens einen Container und/oder die dem wenigstens einen Pod zugeordnete Kennung einen Namen des wenigstens einen Containers und/oder einen Namen des wenigstens einen Pods enthalten. Bevorzugt handelt es sich um einen Namen, der dem wenigstens einen Container bzw. Pod aus applikativer Sicht und/oder anwenderseitig gegeben wurden, und/oder, der von einer Container-Engine verwendet wird.

Dass die Anfragen unter Angabe nur von Namen der Container bzw. Pods bzw. Netzwerk-Stacks gestellt werden können, und somit die Paketerfassung über die Namensangabe möglich wird, stellt einen erheblichen Vorteil sowohl für industrielle Anwender als auch Applikationen für ein automatisiertes Auswerten von Netzwerkverkehr dar, weil diese Namen für den Anwender verständliche und einfach zuzuordnenden sind, im Gegensatz zu durch die Container-Engines und Betriebssysteme kontrollierte und dynamisch zugeordneten Identifikatoren.

Eine weitere Ausführungsform zeichnet sich dadurch aus, dass das Cluster-Erfassungsmodul in Schritt b) eine Anfrage zum Erfassen von Datenpaketen in wenigstens einem Container und/oder in wenigstens einem Pod erhält, und das Cluster-Erfassungsmodul anhand der enthaltenen Kennung des wenigstens einen Containers und/oder des wenigstens einen Pods und unter Rückgriff auf die in bzw. gemäß Schritt a) erhaltenen Informationen den Knoten ermittelt, dem der wenigstens eine Container und/oder der wenigstens eine Pod, dessen Kennung in der Anfrage enthalten ist, zugeordnet ist, und in Schritt c) das Knoten-Erfassungsmodul dieses Knotens kontaktiert.

Soll der Verkehr eines Containers bzw. Pods mitgeschnitten werden und enthält die entsprechende Anfrage den Namen des Containers bzw. Pods, kann das Cluster-Erfassungsmodul mit anderen Worten anhand des Namens und unter Rückgriff auf die gemäß Schritt a) erhaltenen Informationen den Knoten und bevorzugt auch den Netzwerk-Stack ermitteln, dem der wenigstens eine Container und/oder der wenigstens eine Pod, dessen Kennung, insbesondere Name in der Anfrage enthalten ist, zugeordnet ist, und es kann in Schritt c) das Knoten-Erfassungsmodul dieses Knotens kontaktieren und das Knoten-Erfassungsmodul kann zweckmäßiger Weise die Paketerfassung in dem zugehörigen Netzwerk-Stack starten.

Für den Fall, dass das Cluster-Erfassungsmodul in Schritt b) eine Anfrage zum Erfassen von Datenpaketen in wenigstens einem Container und/oder in wenigstens einem Pod erhält, gilt weiter bevorzugt, dass es anhand der in der Anfrage enthaltenen Kennung des wenigstens einen Containers und/oder des wenigstens einen Pods und unter Rückgriff auf die gemäß Schritt a) erhaltenen Informationen den Netzwerk-Stack ermittelt, welcher dem wenigstens einen Container und/oder dem wenigstens einen Pod zugeordnet ist. Dann kann es dem Knoten-Erfassungsmodul eine diesem Netzwerk-Stack zugeordnete Kennung, insbesondere inode-Nummer übermitteln. Die Container/Pod-Kennung(en) in der Anfrage können beispielsweise Namen sein, die dann für das Knoten-Erfassungsmodul sozusagen in die zugehörige Netzwerk-Stack-Kennung, insbesondere Netzwerk-Stack-inode-Nummer "übersetzt" werden.

Für den Fall, dass der Mitschnitt von Paketen eines Einzelcontainers gewünscht ist, enthält die Anfrage in besonders bevorzugter Ausgestaltung zusätzlich die Angabe des Knotens, auf welchem sich der Container befindet. So wird es insbesondere möglich, dass auch für denjenigen Fall, dass dem Namen gemäß den Informationen nicht nur ein Knoten zugeordnet ist, weil Einzelcontainernamen ggf. nicht eindeutig sind, der richtige Knoten gewählt werden kann. In diesem Falle wird anhand der Informationen dann bevorzugt nur ermittelt, welche Kennung, insbesondere inode-Nummer der Netzwerk-Stack hat, zu welchem der angegebene Container gehört.

Auch für den Fall, dass eine Anfrage für die Paketerfassung in einem Netzwerk-Stack (mit oder ohne Prozess(en)) angefragt wird, wird bevorzugt zusätzlich der Knoten angegeben bzw. genannt.

Da Podnamen in der Regel eindeutig sind, wird für den Fall, dass der Paketmitschnitt in einem Pod unter Angabe dessen Name angefragt wird, die zusätzliche Nennung des Knotens in der Regel nicht erforderlich sein. Hier kann allein anhand des Podnamens über die Informationen, über welche das Cluster-Erfassungsmodul verfügt, sowohl der Knoten als auch der Netzwerk-Stack ermittelt werden und dann der entsprechende Knoten bzw. dessen Knoten-Erfassungsmodul kontaktiert und zur Paketerfassung im richtigen Stack veranlasst werden.

Für den Fall, dass das Cluster-Erfassungsmodul in Schritt b) eine Anfrage zum Erfassen von Datenpaketen an wenigstens einem Netzwerk-Stack erhält, kann in vorteilhafter Ausgestaltung vorgesehen sein, dass es anhand der enthaltenen Kennung und unter Rückgriff auf die gemäß Schritt a) erhaltenen Informationen eine weitere, von dieser Kennung verschiedene Kennung des Netzwerk-Stacks, insbesondere eine inode-Nummer dieses ermittelt und bevorzugt dem Knoten-Erfassungsmodul die weitere Kennung übermittelt. Die Kennung in der Anfrage kann beispielsweise ein Name sein, der dann für das Knoten-Erfassungsmodul umgewandelt" werden kann, besonders bevorzugt in eine inode-Nummer des Stacks.

Es kann sein, dass die dem (jeweiligen) Knoten-Erfassungsmodul mitgeteilte Kennung des Netzwerk-Stacks, insbesondere die inode-Nummer, von einem Werkzeug, welches das (jeweilige) Knoten-Erfassungsmodul nutzt, insbesondere, um in den betroffenen bzw. erforderlichen Stack zu wechseln, nicht direkt verarbeitet werden kann. Ein Beispiel eines solchen Werkzeuges ist "nsenter" (siehe z.B. http://man7.org/linux/manpages/man1/nsenter.1.html).

Eine weitere Ausführungsform zeichnet sich daher dadurch aus, dass das (jeweilige) Knoten-Erfassungsmodul die vom Cluster-Erfassungsmodul übermittelte Kennung und/oder weitere Kennung umwandelt. Als besonders zweckmäßig hat sich die Umwandlung in einen Pfadnamen im Dateisystem des Knotens, dem das Knoten-Erfassungsmodul zugeordnet ist, erwiesen. Dies ist eine z.B. von dem Werkzeug "nsenter" verarbeitbare Form.

Hierzu durchsucht das (jeweilige) Knoten-Erfassungsmodul bevorzugt die von Prozessen benutzten Netzwerk-Namensräume (Network Namespaces), insbesondere, indem alle Verweise in "/proc/$PID/ns/net" überprüft werden, ob sie auf den gesuchten Netzwerk-Stack bzw. dessen inode verweisen. Hierbei wird bevorzugt der Reihe nach $PID durch alle PIDs der aktuell laufenden Prozesse ersetzt.
Weiterhin bevorzugt werden alle Mount-Positionen des "nsfs"-Dateisystems durchsucht, ob diese Mount-Positionen auf den gesuchten Netzwerk-Stack bzw. dessen inode verweisen. Das Auffinden der Mount-Positionen erfolgt dabei zweckmäßiger Weise über das Auswerten von "/proc/$PID/mountinfo"-Pseudo-dateien für alle PIDs der aktuell laufenden Prozesse. Hierbei können auch solche Mount-Positionen von Netzwerk-Stacks gefunden werden, denen kein Prozess zugeordnet ist, weil die Mount-Positionen selbst immer Prozessen zugeordnet sind. Das Ergebnis dieser Suche ist bevorzugt ein Dateisystem-Pfad, der auf den per inode gesuchten Netzwerk-Stack verweist und der an ein Werkzeug wie "nsenter" übergeben werden kann, etwa durch "nsenter - net=<pfad>...".

In weiterer besonders bevorzugter Ausgestaltung des erfindungsgemäßen Verfahrens zur Diagnose des Datenverkehrs und/oder Verfahrens zum Ermitteln einer Container-Konfiguration ist vorgesehen, dass das Cluster-Erfassungsmodul die von den Knoten-Discoverymodulen mehrerer Knoten erhaltenen Informationen zusammenführt und speichert, insbesondere in einem Datensatz, welcher zumindest die auf den Knoten vorhandenen Netzwerk-, beispielsweise IP-Stacks, deren Netzwerkschnittstellen und die auf den Knoten vorhandenen Container und/oder Pods und bevorzugt Referenzen auf die jeweils zugehörigen Knoten-Discoverymodule aufführt. Die Container und/oder Pods, Netzwerk-Stacks und Netzwerkschnittstellen können beispielsweise über zu diesen gehörige Kennungen, beispielsweise Namen aufgeführt sein.

Dass eine Konfiguration eines Knotens ermittelt wird bedeutet insbesondere bzw. schließt insbesondere ein, dass ermittelt wird, welche Container und/oder Pods auf dem Knoten vorhanden sind, welche Netzwerk-Stacks der oder der jeweilige Knoten aufweist, welche Netzwerkschnittstellen die Netzwerk-Stacks des oder des jeweiligen Knotens haben und welcher Container bzw. Pods des oder des jeweiligen Knotens welchem Netzwerk-Stack des oder des jeweiligen Knotens zugeordnet ist.

Es sei angemerkt, dass das Cluster-Erfassungsmodul in der Regel die Informationen über den oder die Knoten ermittelt bzw. erhalten wird, bevor eine Anfrage für einen Paket-"Mitschnitt" von einem anfragenden Modul empfangen wird. Die Reihenfolge wird also in der Regel Schritt a) vor Schritt b) sein. Dies ist jedoch nicht zwingend der Fall, das bedeutet, es ist auch nicht ausgeschlossen, dass das Cluster-Erfassungsmodul erst nach dem Erhalt einer Abfrage zum Erfassen von Datenpaketen die Informationen, insbesondere von Knoten-Discoverymodulen, erhält.

Weiterhin sei angemerkt, dass allen Arbeitsknoten des Clusters, auf denen Container und/oder Pods vorhanden sind bzw. für welche dies vorgesehen ist, oder auch allen Knoten jeweils ein Knoten-Discoverymodul und/oder ein Knoten-Erfassungsmodul zugeordnet sein kann, bzw. diese alle ein Knoten-Discoverymodul und/oder Knoten-Erfassungsmodul aufweisen können. Selbstverständlich ist es aber auch möglich, dass gezielt nur ein Teil der Knoten entsprechend ausgestattet ist.

Das Cluster-Erfassungsmodul besitzt zweckmäßiger Weise Zugriff auf die Cluster-Control-Plane des Clusters. Dann kann es unter Zugriff auf diese bzw. über diese die im Cluster vorhandenen bzw. verfügbare Knoten-Erfassungsmodule und/oder Knoten-Discoverymodulen ermitteln. Da Knoten-Erfassungsmodule und/oder Knoten-Discoverymodule Knoten-spezifische Dienste sind, werden ihre Exemplare in der Regel nicht einfach untereinander austauschbar sein.

Das Cluster-Erfassungsmodul kann eine Aggregationseinheit umfassen, welche die von den Knoten-Discoverymodulen von mehreren Knoten erhaltenen Informationen zusammenführt.

Das Cluster-Erfassungsmodul, insbesondere eine Aggregationseinheit dieses kann beispielsweise anhand einer Liste verfügbarer Knoten-Discoverymodule von bevorzugt allen Knoten-Discoverymodulen jeweils eine Liste von Containern und/oder Pods mit den zugeordneten (virtuellen) Netzwerk-Stacks, zu denen bevorzugt die inode-Nummern aufgeführt sind, und Netzwerkschnittstellen abfragen und daraus einen Gesamtkatalog erstellen. Dieser Gesamtkatalog enthält dann bevorzugt die Namen aller Container und/oder Pods, die Kennungen (IDs) der ihnen jeweils zugeordneten (virtuellen) Netzwerk-Stacks, insbesondere inode-Nummern, die Namen der dazu gehörigen Netzwerk-Schnittstellen sowie eine Referenz auf das jeweils zuständige Knoten-Erfassungsmodul, beispielsweise in Form einer IP-Adresse.

Das Cluster-Erfassungsmodul, insbesondere eine Aggregationseinheit dieses, kann einen Gesamtkatalog über einen vereinheitlichten Zugangspunkt insbesondere für eines oder mehrere anfragende Module bereitstellen. Der fertige Gesamtkatalog kann beispielsweise über ein HTTP REST API abgerufen werden.

Die Informationen, über welche das Cluster-Erfassungsmodul verfügt, insbesondere der Gesamtkatalog, kann auch dem anfragenden Modul übermittelt werden. Insbesondere in diesem Fall ist es denkbar, dass die Kennung, insbesondere inode-Nummer des Netzwerk-Stacks, für den bzw. für dessen zugehörigen Container und/oder Pod ein Mitschnitt gewünscht ist, auch vorab ermittelt und dem Cluster-Erfassungsmodul zusammen mit der Anfrage zur Verfügung gestellt wird.

Weiterhin kann vorgesehen sein, dass das Cluster-Erfassungsmodul, insbesondere eine Aggregationseinheit dieses, für zumindest eines, bevorzugt alle im Cluster vorhandenen Knoten-Erfassungsmodule Routen, insbesondere HHTP- und/oder Websocket-Proxy-Routern konfiguriert. So wird es möglich, dass die Adressen, insbesondere IP-Adressen der Knoten-Erfassungsmodule rein Cluster-intern bleiben und externe anfragende Module müssen nur einen einzigen Ansprechpunkt kennen, das Cluster-Erfassungsmodul. Es sei angemerkt, dass dieser Aspekt des Weiterleitens zu Knoten-spezifischen Diensten auch bereits in der ebenfalls auf die Anmelderin zurückgehenden früheren europäischen Patentanmeldung der Anmeldenummer 19 180 018.4 beschrieben ist.

Das Cluster-Erfassungsmodul umfasst in weiterer vorteilhafter Ausgestaltung einen Reverse-Proxy, welcher von dem anfragenden Modul stammende Anfragen jeweils an das zugehörige Knoten-Erfassungsmodul weiterleitet (zu Reverse Proxys siehe beispielweise https://de.wikipedia.org/wiki/Reverse_Proxy bzw. https://docs.nginx.com/nginx/admin-guide/webserver/reverse-proxy/ bzw. https://traefik.io/). Dann kann der Reverse-Proxy einerseits Anfragen zum Gesamtkatalog gezielt an die Aggregationseinheit weiterleiten, während Anfragen an Knoten-Erfassungsmodule, insbesondere Paketerfassungs-Anfragen, entsprechend an diese weitergeleitet werden. Es ist prinzipiell auch möglich, dass der Reverse-Proxy Anfragen, auch Anfragen, die nicht das Capturing von Paketen oder die Discovery betreffen, an Knoten-Discoverymodule weiterleitet.

Das dem (jeweiligen) Knoten zugeordnete Knoten-Erfassungsmodul und/oder das dem (jeweiligen) Knoten zugeordnet Knoten-Discoverymodul ist bevorzugt auf dem (jeweiligen) Container-Konten implementiert. Zweckmäßiger Weise ist es nicht das Ziel eines Knoten-Discoverymoduls, eine Cluster-weite Gesamtsicht herzustellen, sondern dies wird bevorzugt von dem Cluster-Erfassungsmodul übernommen.

Das bzw. die Knoten-Erfassungsmodule und/oder das oder die Knoten-Discoverymodule sind weiter bevorzugt wenigstens einmal je (Container-)Arbeitsknoten des Clusters vorgesehen. Für das Erfassen von Netzwerkpaketen in den Containern eines Knotens wird in der Regel genau ein Knoten-Erfassungsmodul genügen und für die Beschaffung der knotenspezifischen Informationen über eine bzw. die Container-Konfiguration in der Regel genau ein Knoten-Discoverymodul. Es sei angemerkt, dass es aber auch nicht ausgeschlossen ist, dass auf einem Knoten eines oder mehrere weitere Erfassungsmodule und/oder eines oder mehrere weitere Discoverymodule implementiert sind.

Das bzw. das jeweilige Knoten-Discoverymodul erfasst bevorzugt konfigurationslos, insbesondere direkt auf seinen Start hin, die aktuell auf dem zugeordneten Knoten vorhandenen Container bevorzugt inklusive eventueller Container-Gruppen, sprich: "Pods", deren Zuordnung zu (virtuellen) Netzwerk-Stacks sowie die Netzwerk-Schnittstellen der jeweiligen (virtuellen) Netzwerk-Stacks.

Bei den Netzwerk-Stacks der Knoten handelt es sich beispielsweise um IP-Stacks. Bevorzugt werden alle Netzwerk-, insbesondere IP-Stacks des (jeweiligen) Knotens erfasst, insbesondere auch solche (virtuellen) Netzwerk-, insbesondere IP-Stacks, die keinem Container/Pod zugeordnet sind, wie beispielsweise der initiale "root" bzw. Host-Netzwerk-Stack.

Der Host-Netzwerk-Stack (ins Deutsche übersetzt: Host-Netzwerk-Stapel) ist insbesondere der Netzwerk-Stack eines Host-Netzwerknamensraumes des jeweiligen Arbeitsknotens. Unter dem Host-Netzwerknamensraum (englisch: Host-Network-Namespace) ist in der Regel derjenige Namensraum zu verstehen, mit dem das Betriebssystem des Arbeitsknotens startet. Neben diesem kann einer oder können weitere Netzwerk-Stacks vorhandenen sein, die dann insbesondere die Netzwerk-Stacks weiterer Netzwerknamensräume des Arbeitsknotens sind. Der Host-Netzwerk-Stack und/oder der oder die weiteren Netzwerk-Stacks sind bevorzugt virtuelle Netzwerk-Stacks. Unter Namensräumen ist insbesondere ein Feature des Kernels eines Betriebssystems, wie etwa Linux, zu verstehen, das es erlaubt, Kernel-Ressourcen zu partitionieren, beispielswiese derart, dass ein Prozess bzw. eine Gruppe von Prozessen einen Teil der Ressourcen sieht und ein anderer Prozess bzw. eine andere Gruppe von Prozessen einen anderen Teil der Ressourcen. Insbesondere über Netzwerk-Namensräume kann der Netzwerk-Stack virtualisiert werden.

In besonders vorteilhafter Weiterbildung ist ferner vorgesehen, dass von dem Knoten-Discoverymodul des oder des jeweiligen Knotens Netzwerk-Stacks des oder des jeweiligen Knotens erfasst werden, indem eine bzw. die Prozesstabelle des Betriebssystems des oder des jeweiligen Knotens mit darin enthaltenen Verweisen auf von Prozessen zugeordneten Netzwerk-Stacks ausgelesen. Das Auslesen kann beispielsweise über "/proc/$PID/ns/net" erfolgen. Als Ergebnis wird bevorzugt eine Liste erhalten. Anschließend werden in vorteilhafter Weiterbildung gegebenenfalls vorhandene Duplikate entfernt, insbesondere aus einer erhaltenen Liste.

Weiterhin bevorzugt von dem Knoten-Discoverymodul des oder des jeweiligen Knotens Netzwerk-Stacks des oder des jeweiligen Knotens erfasst, indem aktuell aktive Mounts (insbesondere "/proc/$PID/mountinfo") des Betriebssystems des oder des jeweiligen Knotens ausgelesen und bevorzugt nur diejenigen Einträge berücksichtigt werden, die das Namespace-Dateisystem betreffen. In der Regel können nur diese können auf (virtuelle) Netzwerk-Stacks verweisen. Auf diese Weise werden auch virtuelle Netzwerk-Stacks erfasst, denen aktuell kein(e) Prozess(e) zugeordnet sind. Die so gefundenen Einträge werden bevorzugt in die bisherige Liste der gefunden Netzwerk-Stacks eingepflegt, sofern es sich nicht um Duplikate handelt.

In weiterer bevorzugter Ausgestaltung werden dann von dem (jeweiligen) Knoten-Discoverymodul für jeden einzelnen (virtuellen) Netzwerk-Stack dessen aktuell vorhandenen Netzwerk-Schnittstellen erfasst und diese ihren zugehörigen Netzwerk-Stacks zugeordnet.

Danach werden bevorzugt alle Container und/oderPods, die im jeweiligen Knoten vorhanden sind, durch das (jeweilige) Knoten-Discoverymodul erfasst.

Dass ein Container vorhanden ist, kann beispielsweise bedeuten, dass dieser (erst einmal nur) erzeugt ist, insbesondere ohne dass in ihm schon Prozesse gestartet worden sind bzw. laufen. Der Container ist dann insbesondere (nur) konfiguriert. Weiterhin können die Prozesse in einem Container bereits beendet worden sein, der Container aber verwaltungstechnisch noch erkennbar sein. Zudem kann ein Container mit Prozessen auch angehalten (sozusagen eingefroren) sein. Alternativ oder zusätzlich können auch Container in diesem "Zustand" als vorhanden aufgefasst und in Schritt c) ermittelt werden. In bevorzugter Ausgestaltung werden Container, welche (nur) konfiguriert sind und noch über keinen Netzwerk-Stack verfügen, herausgefiltert. Das Herausfilter ist zweckmäßiger Weise derart, dass als Ergebnis nur der oder diejenigen Container bzw. Pods übrigbleiben, welche über wenigstens einen Netzwerk-Stack verfügen. Ein Netzwerk-Stack, über den eine Container verfügt kann dabei auch ein solcher sein, der mit anderen Containern und/oder Pods und/oder dem Host geteilt wird. Die Filterung ist vorteilhaft, da Container, die (noch) nicht über einen Netzwerk-Stack verfügen auch nicht über Netzwerkschnittstellen verfügen und somit das Mitschneiden von Netzwerkverkehr nicht möglich ist.

Um die Container des Knotens zu ermitteln bzw. zu erfassen, kann das (jeweilige) Knoten-Discoverymodul die Container-Engine kontaktieren, die dem jeweiligen Knoten zugeordnet ist. Container-Engines (beispielsweise docker, siehe etwa https://www.docker.com) kommen üblicherweise zur Verwaltung der Container zum Einsatz, kümmern sich beispielsweise um das Herunterladen der benötigten Container-Abbilder und das Starten und Stoppen.
Es sei angemerkt, dass es prinzipiell möglich ist, dass in einem Cluster nur eine Container-Engine vorhanden ist oder mehrere Container-Engines vorhanden sind bzw. auf jedem Knoten eine Instanz der Container-Engine vorgesehen ist. Die Ermittlung der Container des Knotens kann beispielsweise erfolgen, indem über wenigstens einen geeigneten Steuerkanal, z.B. einen geeigneten Unix Socket (siehe beispielsweise https://de.wikipedia.org/wiki/POSIX_local_inter-process_communication_socket), auf eine von der Container-Engine geführte Liste der vorhandenen Container zugegriffen wird. Zweckmäßiger Weise werden auch die zu den Containern gehörigen Prozesskennungen (PIDs) ermittelt bzw. abgerufen und/oder zu den Containern gehörige Namen, insbesondere Namen, die von der Container-Engine genutzt werden, die den Containern aus applikativer Sicht und/oder anwenderseitig gegeben wurden.

Es sei angemerkt, dass die Erfassung von Containern auf den Arbeitsknoten eines Clusters auch in der ebenfalls auf die Anmelderin zurückgehenden früheren europäischen Patentanmeldung der Anmeldenummer 19 198 405.3 beschrieben ist.

Je nach verwendeter Container-Engine (wie beispielsweise Docker), können dann noch die Container automatisch anhand eines festen, bekannten Namensschemas ihren Pods zugeordnet werden, sofern die Container Engine diese Zuordnung nicht bereits selbst verwaltet.

Für jeden erfassten Container beziehungsweise Pod kann dann insbesondere anschließend der von ihm verwendete Netzwerk-Stack über den Weg der Prozesstabelle des Betriebssystems ermittelt werden (insbesondere über "/proc/$PID/ns/net") und diese Zuordnung wird bevorzugt gespeichert. Es sei angemerkt, dass hier zweckmäßiger Weise die Prozesskennungen (PIDs) des Containers herangezogen werden. Damit sind für die erfassten Container dann auch die jeweils zugehörigen Netzwerk-Schnittstellen bekannt. Denn ist bekannt, welcher Container/Pod welchem Netzwerk-Stack zugeordnet ist, und welche Netzwerkschnittstellen zu welchem Netzwerk-Stack gehören, ist auch bekannt, welche Netzwerkschnittstelle(n) zu welchem Container/Pod gehört bzw. gehören.

Bevorzugt werden alle Netzwerk-Stacks, die nicht mindestens einen Container haben, entsprechend markiert.

Es kann weiterhin vorgesehen sein, dass eine Dienste-Schnittstelle des (jeweiligen) Knoten-Discoverymoduls beispielsweise über ein HTTP REST API die erfassten Informationen zur Verfügung stellt. Bevorzugt wird eine Liste aller Pods/Container, jeweils mit den Namen den ihnen zugeordneten Netzwerk-Schnittstellen und außerdem der eindeutigen Kennung des jeweiligen virtuellen Netzwerk-Stacks zur Verfügung gestellt. Die Information über markierte Netzwerk-Stacks, die keinen Container haben, kann dabei ebenfalls insbesondere dem Cluster-Erfassungsmodul, zur Verfügung gestellt werden.

Die Datenpakete eines bzw. in einem Container bzw. Pod können erfasst werden, indem der Datenverkehr an der oder den Schnittstellen desjenigen Netzwerk-Stacks erfasst wird, der dem Container/Pod zugeordnet ist, also der Schnittstellen des zu dem Container gehörigen Netzwerk-Stacks. In Linux beispielsweise liegen die Netzwerk-Stacks in Form von (Linux Kernel) Netzwerk-Namensräumen (engl.: network namespaces) vor. Dem oder den Prozessen eines Containers ist ein Netzwerk-Namensraum, mit anderen Worten Netzwerk-Stack zugeordnet. Dieser Netzwerk-Namensraum bzw. Netzwerk-Stack ist der Netzwerk-Namensraum bzw. Netzwerk-Stack des Containers.

Bevorzugt gilt, dass für den Fall, dass das Cluster-Erfassungsmodul in Schritt b) eine Anfrage zum Erfassen von Datenpaketen an wenigstens einem Netzwerk-Stack erhält, das Knoten-Erfassungsmodul in Schritt c) zunächst insbesondere automatisch in denjenigen Netzwerk-Stack wechselt, dessen Kennung in der Anfrage angegeben ist, und dann die Datenpakete an der oder den Netzwerkschnittstellen dieses Netzwerk-Stacks erfasst.

In Analoger Weise kann vorgesehen sein, dass für den Fall, dass das Cluster-Erfassungsmodul in Schritt b) eine Anfrage zum Erfassen von Datenpaketen in wenigstens einem und/oder in wenigstens einem Pod erhält, das Knoten-Erfassungsmodul in Schritt c) bevorzugt automatisch in denjenigen Netzwerk-Stack wechselt, der dem wenigstens einen Container und/oder dem wenigstens einen Pod, dessen Kennung in der Anfrage angegeben ist, zugeordnet ist, und dann die Datenpakete an der oder den Netzwerkschnittstellen dieses Netzwerk-Stacks erfasst.

Die Wahl eines Netzwerk-, etwa IP-Stacks bzw. der Wechsel in einen solchen ist beispielsweise über den Befehl nsenter möglich (siehe z.B. http://man7.org/linux/manpages/man1/nsenter.1.html)

Bekannte Tools benötigen in der Regel die Angabe von Netzwerkschnittstellen, die "abzuhören" sind und können nur auf demjenigen Netzwerk-, etwa IP-Stack arbeiten, auf dem sie gestartet werden. Erfindungsgemäß wird es nun möglich, dass der zu einem mit einer Anfrage genannten Container gehörige Netzwerk-Stack gezielt insbesondere automatisch durch das (jeweilige) Knoten-Erfassungsmodul ausgewählt wird. Dann kann auch ein herkömmliches Tool greifen, welches in dem gewählten Stack an dessen Schnittstelle(n) Pakete mithört bzw. aufzeichnet.
Um die Auswahl treffen zu können, kann dem (jeweiligen) Knoten-Erfassungsmodul der zu dem betroffenen Container/Pod gehörige Netzwerk-Stack kommuniziert werden, bevorzugt von dem Cluster-Erfassungsmodul. Es ist auch möglich, dass dem (jeweiligen) Knoten-Erfassungsmodul nicht der Netzwerk-Stack sondern der Container/Pod mitgeteilt wird. Dann kann das (jeweilige) Knoten-Erfassungsmodul insbesondere von dem Knoten-Discoverymodul des Knotens die Information, etwa eine Liste, abfragen, welche Container bzw. Pods zu welchen Netzwerk-Stacks gehören und kann den richtigen Stack ermitteln und dann diesen wählen.

Dass das bzw. das jeweilige Knoten-Erfassungsmodul in einem oder mehreren betroffenen Containern/Pods/Netzwerk-Stacks Pakete erfasst und an das Cluster-Erfassungsmodul weiterleitet bedeutet insbesondere bzw. schließt insbesondere mit ein, dass es Pakete in dem oder dem jeweiligen Container/Pod bzw. an dem oder den jeweiligen Stack den Datenverkehr der zugehörigen Netzwerkschnittstellen detektiert bzw. registriert und Duplikate dieser erstellt und die Duplikate an das Cluster-Erfassungsmodul übermittelt, insbesondere streamt. Das Mitschneiden/"Capturen" einschließlich einem Duplizieren ist von den vorbekannten Capture-Tools, wie etwa Wireshark, prinzipiell vorbekannt.

Das Erfassen kann beispielsweise mit vorbekannten Mitteln bzw. Tools wie z.B. tcpdump (siehe z.B. https://www.tcpdump.org/) bewerkstelligt werden, wobei das (jeweilige) Knoten-Erfassungsmodul dann vor dem Aufruf eines solchen Werkzeugs zweckmäßiger Weise zunächst zum gewünschten Netzwerk-Stack wechselt, beispielsweise mittels nsenter (siehe z.B. http://man7.org/linux/man-pages/man1/nsenter.1.html) so dass vorhandene Werkzeuge ohne Wissen über virtuelle Netzwerk-Stacks transparent auf den jeweils gewünschten Netzwerk-Stack aufgeschaltet werden. Das bzw. das jeweilige Knoten-Erfassungsmodul kann entsprechende vorbekannte Mittel umfassen.

An dem durch das oder die Knoten-Erfassungsmodule bereitgestellten Capture-Service ist gegenüber dem Stand der Technik insbesondere neuartig, dass er im Gegensatz zu heute bekannten Capture-Tools (wie beispielsweise tcpdump) auf der Ebene Container-spezifischer virtueller Netzwerk-Stacks sowie deren zugeordneten Netzwerkschnittstellen arbeiten kann bzw. arbeitet. Dieser Dienst bzw. dieses oder diese Module können damit auf der Ebene von Containern bzw. Pods arbeiten bzw. arbeiten auf der Ebene dieser.

Das (jeweilige) Knoten-Erfassungsmodul kann in Software oder in Hardware oder in Kombination aus Soft- und Hardware implementiert sein. Dies kann alternativ oder zusätzlich auch für das (jeweilige) Knoten-Discoverymodul und/oder das Cluster-Erfassungsmodul und/oder das anfragende Modul gelten. Eines oder mehrere der Module können ihrerseits als Container umgesetzt bzw. realisiert sein.
In vorteilhafter Ausgestaltung können ein Knoten-Erfassungsmodul und ein Knoten-Discoverymodul eines als zwei Container eines einzigen Pods umgesetzt sein.

Das (jeweilige) Knoten-Erfassungsmodul startet bevorzugt nach dem erfolgreiche Verbindungsaufbau eines anfragenden Moduls an das Cluster-Erfassungsmodul (beispielsweise über einen sogenannten "websocket", siehe beispielsweise RFC 6455 "The Websocket Protocol" https://tools.ietf.org/html/rfc6455) das Erfassen von Netzwerk-Paketen am beim Verbindungsaufbau spezifizierten wenigstens einen Container bzw. Pod bzw. Netzwerk-Stack (virtueller Netzwerk-Stack) und den gewünschten Schnittstellen. Die ab dann erfassten Pakete - bzw. Duplikate dieser - können dann über eine Verbindung an das Cluster-Erfassungsmodul weitergeleitet (gestreamt) werden.

Das anfragende Modul, insbesondere ein Client kann zusätzlich das Vorfiltern erfasster Pakete bzw. zugehöriger Duplikate veranlassen.

Bevorzugt beendet das (jeweilige) Knoten-Erfassungsmodul das Erfassen und Weiterleiten von Paketen, wenn das beim Cluster-Erfassungsmodul anfragende Modul die Verbindung beendet.

Es sei angemerkt, dass die Weiterleitung der erfassten Datenpakete bzw. zugehörigen Duplikaten an das Cluster-Erfassungsmodul und das anfragende Modul bevorzugt "online" erfolgt, insbesondere noch während ein Erfassungsvorgang andauert. Es muss insbesondere nicht erst ein vollständiges Beenden eines Mitschnittes abgewartet werden, sondern es wird in Analogie zu einer Live-Übertragung, bei welcher die einzelnen Bilder "sofort" übertragen und nicht das Ende der Aufzeichnung abgewartet wird, vorgegangen.

Das jeweilige Knoten-Erfassungsmodul kann das Erfassen und Streaming von Paketen zwischenzeitlich anhalten und wieder fortsetzen.

Steuerkommandos wie beispielsweise "Pause" und "Fortsetzen" können zwischen dem anfragenden Modul und dem Cluster-Erfassungsmodul in besonders zweckmäßiger Ausgestaltung über eine bereits für das Streaming von Paketen aufgebaute Verbindung übertragen werden.

Das bzw. die Knoten-Erfassungsmodule verfügen weiterhin bevorzugt über einen Selbst-Schutz, der verhindert, dass der an das Cluster-Erfassungsmodul "gestreamte" Paketstrom versehentlich erneut erfasst wird, um eine Rückkopplung zu verhindern. Dazu blockiert das (jeweilige) Knoten-Erfassungsmodule den Paket-Mitschnitt an den Schnittstellen des Knoten-Erfassungsmoduls selbst und filtert solche Pakete aus, die zur Verbindung vom Cluster-Erfassungsmodul bzw. des anfragenden Moduls, etwa in Form eines Cluster-Erfassungs-Clients, gehören. Dies kann beispielsweise anhand der Adresse, insbesondere IP-Adresse des Cluster-Erfassungsmoduls und der Portnummer des Knoten-Erfassungsmodul APIs erfolgen.

In weiterer bevorzugter Ausgestaltung verfügt das (jeweilige) Knoten-Erfassungsmodul über eine konfigurierbare Beschränkung der gleichzeitig aktiven Paketströme, um insbesondere bei mehrfachen parallelen Verbindungen die Last zu beschränken.

Das anfragende Modul, welches eine Anfrage für den "Mitschnitt" von Datenpaketen an das Cluster-Erfassungsmodul stellt, kann beispielsweise durch einen Client gegeben sein, zweckmäßiger Weise ein Client in Bezug auf das Cluster-Erfassungsmodul bzw. ein Client des Cluster-Erfassungs-Moduls. Ein solcher Client kann auch als Cluster-Erfassungs-Client bezeichnet werden. Ein Cluster-Erfassungs-Client kann sich sowohl außerhalb des Clusters befinden, also ein externer Client sein, als auch eine Cluster-interne Anwendung. Ein anfragendes Modul in Form eines (Cluster-Erfassungs-)Clients kann beispielsweise als ein sogenanntes "extcap" Plugin für Wireshark ausgestaltet sein (siehe beispielsweise https://www.wireshark.org/docs/man-pages/extcap.html).

Eine weitere Ausführungsform zeichnet sich dadurch aus, dass das anfragende Modul seinerseits von einem Netzwerk-Analysemodul eine Anfrage für das Erfassen von Datenpaketen erhält.

Das anfragende Modul übermittelt die Anfrage dann zweckmäßiger Weise an das Cluster-Erfassungsmodul. Mit anderen Worten ist das anfragende Modul, z.B. ein (Cluster-Erfassungs-)Client, nur ein Vermittler, der die Anfragen für die Paketerfassung entgegennimmt und an das Cluster-Erfassungsmodul "durchreicht". Ein Netzwerk-Analysemodul kann - in Analogie zu einem ggf. vorgesehenen Cluster-Erfassungs-Client - in Bezug auf den Cluster sowohl extern als auch intern sein.

Stammt die Anfrage für den "Mitschnitt" von Netzwerkpaketen von einem Netzwerk-Analysemodul, kann der Cluster-Erfassungs-Client zweckmäßiger Weise die erfassten Datenpakete, die er vom Cluster-Erfassungsmodul erhalten hat bzw. erhält, an das Netzwerk-Analysemodul weiterleiten, also auch die gestreamten Pakete "durchreichen".

Es sei angemerkt, dass es auch möglich ist, dass ein Netzwerk-Analysemodul die anfragende Entität ist, insbesondere selber einen Client des Clustererfassungs-Moduls darstellt. Dies insbesondere, wenn das Netzwerk-Analysemodul das Service-Protokoll des Clustererfassungs-Moduls beherrscht.

Zwischen dem anfragenden Modul und dem Cluster-Erfassungsmodul kann ein Kanal für die Übertragung erfasster Pakete bzw. zugehöriger Duplikate von dem Cluster-Erfassungsmodul an das anfragende Modul aufgebaut und für die Übertragung in Schritt e) genutzt werden. In gleicher Weise kann alternativ oder zusätzlich zwischen dem Cluster-Erfassungsmodul und dem oder dem jeweiligen Knoten-Erfassungsmodul ein Kanal für die Übertragung erfasster Pakete bzw. zugehöriger Duplikate von dem oder dem jeweiligen Knoten-Erfassungsmodul zu dem Cluster-Erfassungsmodul aufgebaut und für die Übertragung in Schritt d) genutzt werden.

In weiterer bevorzugter Ausgestaltung wickelt das anfragende Modul, etwa als (Cluster-Erfassungs-)Client, auch die Authentifizierung gegenüber dem Cluster ab.

Das Cluster-Erfassungsmodul kann beispielsweise per "Cluster-URL" (URL steht dabei in an sich bekannter Weise für Uniform Resource Locator) bzw. der Dienst-URL des Cluster-Erfassungs-moduls identifiziert und damit auch adressiert werden.

Bevorzugt verbindet der Cluster-Erfassungs-Client auf Wunsch des Anwenders beziehungsweise eines Netzwerk-Analysemoduls das Netzwerk-Analysemodul mit einem einzelnen Knoten-Erfassungsmodul unter Zuhilfenahme des Cluster-Erfassungsmoduls sowie eines geeignet erweiterten Dienste-URLs des Cluster-Erfassungsmoduls plus der Identifikation eines einzelnen Knoten-Erfassungsmoduls sowie einem Pod/Container, einem Satz einer oder mehrerer Netzwerkschnittstellen und ggf. weiterer Parameter.

Ein Netzwerk-Analysemodul kann mit dem anfragenden Modul über einen Steuerkanal kommunizieren, über den auch Konfigurationsinformationen und Auswahlentscheidungen des Anwenders übermittelt werden können, wie beispielsweise der ausgewählte Container bzw. Pod. Über einen Steuerkanal kann das anfragende Modul einem Netzwerk-Analysemodul auch mögliche Auswahlinformationen über die verfügbaren Container/Pods und deren Netzwerkschnittstellen übermitteln. Während der Übertragung von Paketen bzw. Duplikaten kann das Netzwerk-Analysemodul über den Steuerkanal den Paketstrom anhalten und fortsetzen, woraufhin der Cluster-Erfassungs-Client entsprechende Steuerkommandos an das (jeweilige) Knoten-Erfassungsmodul übermittelt.

Gegenstand der Erfindung ist auch ein Cluster mit mehreren Arbeitsknoten, wobei auf einem oder mehreren der Knoten jeweils einer oder mehrere Container vorhanden und/oder vorzusehen sind, und wobei einem oder mehreren der Knoten ein Knoten-Erfassungsmodul und dem Cluster ein Cluster-Erfassungsmodul zugeordnet ist, wobei das Cluster-Erfassungsmodul über Informationen verfügt, welchen der Knoten jeweils ein Knoten-Erfassungsmodul zugeordnet ist, und welche Netzwerk-Stacks der oder der jeweilige dieser Knoten aufweist und welcher oder welche Container und/oder Pods auf dem oder dem jeweiligen dieser Knoten vorhanden sind, und, sofern vorhanden, welcher Container und/oder welcher Pod des oder des jeweiligen dieser Knoten welchem Netzwerk-Stack des oder des jeweiligen dieser Knoten zugeordnet ist, und wobei das Cluster-Erfassungsmodul dazu ausgebildet und/oder eingerichtet ist, von einem anfragenden Modul Anfragen für das Erfassen von Datenpaketen an wenigstens einem Netzwerk-Stack und/oder in wenigstens einem Container und/oder Pod eines oder mehrerer dieser Knoten, betroffener Knote, zu empfangen wobei die jeweilige Anfrage eine dem wenigstens einen Netzwerk-Stack zugeordnete Kennung und/oder eine dem wenigstens einen Container und/der eine dem wenigstens einen Pod zugeordnete Kennung umfasst, und um das Knoten-Erfassungsmodul des oder des jeweils betroffenen Knotens zu kontaktieren, und wobei das oder das jeweilige Knoten-Erfassungsmodul dazu ausgebildet und/oder eingerichtet ist, auf eine Anfrage des Cluster-Erfassungsmoduls hin Datenpakete an der oder den Netzwerkschnittstellen des wenigstens einen Netzwerk-Stacks, dessen Kennung in der Anfrage angegeben ist, zu erfassen, und/oder um Datenpakete an der oder den Netzwerkschnittstellen des wenigstens einen Netzwerk-Stacks, der dem wenigstens einen Container und/oder dem wenigstens einen Pod, dessen Kennung in der Anfrage angegeben ist, zugeordnet ist, zu erfassen, und das oder das jeweilige Knoten-Erfassungsmodul dazu ausgebildet und/oder eingerichtet ist, die erfassten Datenpakete bzw. Duplikate dieser an das Cluster-Erfassungsmodul weiterzuleiten, und wobei das Cluster-Erfassungsmodul dazu ausgebildet und/oder eingerichtet ist, die erfassten Datenpakete bzw. Duplikate dieser an das anfragende Modul weiterzuleiten.

Alternativ oder zusätzlich dazu kann sich der erfindungsgemäße Cluster dadurch auszeichnen, dass einem oder mehreren der Knoten jeweils ein Knoten-Discoverymodul zugeordnet ist, wobei das oder das jeweilige Knoten-Discoverymodul dazu ausgebildet und/oder eingerichtet ist, den oder die Netzwerk-Stacks des oder des jeweiligen Knotens und Netzwerkschnittstellen des oder der Netzwerk-Stacks des oder des jeweiligen Knotens sowie auf dem oder dem jeweiligen Knoten vorhandene Container und/oder Pods zu erfassen und, sofern Container und/oder Pods vorhanden sind, zu ermitteln, welcher Container und/oder welcher Pod des oder des jeweiligen Knotens welchem Netzwerk-Stack des oder des jeweiligen Knotens zugeordnet ist,
und das Knoten-Discoverymodul des oder des jeweiligen Knotens dazu ausgebildet und/oder eingerichtet ist, dem Cluster-Erfassungsmodul diese Informationen bevorzugt auf Anfrage des Cluster-Erfassungsmoduls hin zu übermitteln.

Bei einem Arbeitsknoten eines Clusters kann es sich beispielsweise um ein (separates) Gerät bzw. eine (separate) Hardware-Komponente handeln. Selbstverständlich ist es auch möglich, dass ein Arbeitsknoten als "Software-Arbeitsknoten" vorliegt, etwa in Form eines Computerprogrammes bzw. einer Computerprogramm-Sammlung, die auf einer zu dessen/deren Ausführung ausgebildeten Einrichtung, etwa einem PC oder einer anderen Recheneinrichtung oder einem beliebigen anderen Gerät, abgelegt ist.

Ein Arbeitsknoten kann auch wenigstens eine virtuelle Maschine (VM) umfassen oder durch eine solche gegeben sein. Ein Arbeitsknoten kann beispielsweise auch in eine Automatisierungskomponente, etwa eine Steuerung, oder in ein anderes Gerät integriert sein, dies sowohl in Form von Hardware- als auch Software. Ein Cluster-Arbeitsknoten kann auch durch einen entsprechend eingerichteten Industrie-Computer bzw. -PC gegeben sein bzw. einen solchen umfassen.

Besonders bevorzugt handelt es sich bei wenigstens einem Arbeitsknoten um ein Edge-Gerät, insbesondere Industrial-Edge-Gerät. Unter einem Edge-Gerät ist insbesondere ein Gerät zu verstehen, welches die bzw. wenigstens eine Funktion des Edge-Computings ausführt (zum Edge-Computing siehe z.B. https://de.wikipedia.org/wiki/Edge_Computing). Ein Industrial-Edge-Gerät kann beispielsweise durch einen Industrie-Computer gegeben sein, der eine Edge-Computing Funktion ausführt.

Selbstverständlich kann ein Cluster auch verschiedene Arten von Arbeitsknoten umfassen, z.B. wenigstens ein Edge-Gerät und wenigstens eine VM.

Ein weiterer Gegenstand der vorliegenden Erfindung ist ein Computerprogramm umfassend Programmcode-Mittel, die bei der Ausführung des Programms auf wenigstens einem Computer den wenigstens einen Computer veranlassen, die Schritte des erfindungsgemäßen Verfahrens durchzuführen.

Darüber hinaus betrifft die Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Die vorliegende Erfindung bietet mehrere Vorteile. Einerseits kann "Capture as a Service" realisiert und das Erfassen von Netzwerkpaketen im Cluster und Streaming der Pakete auch aus dem Cluster heraus mit Standard-Cluster-Mechanismen ermöglicht werden. Anwender können ihre bekannten Desktop-Applikationen, wie beispielsweise Wireshark, weiterhin benutzen. Diese können ohne Eingriff in die Desktop-Applikation "Cluster-aware" werden. Die Notwendigkeit von speziellen SSH-Sitzungen und speziellen Zugängen zu den einzelnen Arbeitsknoten/Arbeitsrechnern eines Clusters kann entfallen. Es können Standard-Mechanismen der Cluster für Benutzer-Kontrolle und Paket-Streaming verwendet werden. Eine doppelte Anwenderverwaltung kann vermieden werden. Vorhandene Container bzw. Pods müssen nicht extra angepasst oder neugestartet werden, um Netzwerkpakete zu erfassen. "Capture as a Service" kann dabei nicht nur interaktiv von Anwendern genutzt werden, sondern auch automatisiert von entsprechenden Applikationen.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist
- Figur 1: ein Ausführungsbeispiel eines erfindungsgemäßen industriellen Clusters in rein schematischer Darstellung; und
- Figur 2: das Cluster-Erfassungsmodul des Clusters aus Figur 1 in rein schematischer Darstellung.

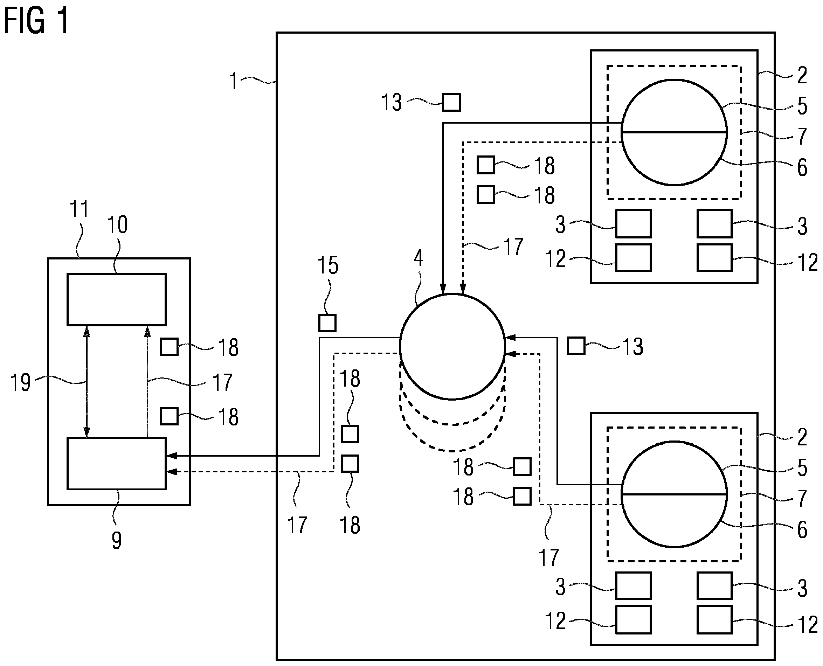

Die Figur 1 zeigt in rein schematischer Darstellung ein Ausführungsbeispiel eines erfindungsgemäßen industriellen Clusters 1 mit mehreren Arbeitsknoten 2, von denen in der Figur 1 beispielhaft zwei dargestellt sind. Bei dem dargestellten Ausführungsbeispiel handelt es sich bei den Arbeitsknoten 2 um sogenannte Indusrial-Edge-Geräte, welche jeweils durch einen Industrie-PC gegeben sind, der wenigstens eine Funktion des Edge-Computings ausführt. Alternativ oder zusätzlich dazu kann wenigstens ein Arbeitsknoten beispielsweise auch durch eine virtuelle Maschine (VM) gegeben sein.

Es sei angemerkt, dass der Cluster 1 neben den zwei beispielhaft gezeigten Knoten 2 in an sich bekannter Weise noch mehr Arbeitsknoten 2 umfassen kann bzw. umfasst. Selbstverständlich kann der Cluster 1 auch verschiedene Arten von Arbeitsknoten 2 umfassen, z.B. wenigstens ein Edge-Gerät und wenigstens eine VM.

Die Knoten 2 des Clusters 1 nehmen an einem nicht weiter dargestellten industriellen Netzwerk teil. Neben den Knoten 2 gibt es bei dem dargestellten Ausführungsbeispiel noch weitere Netzwerkteilnehmer, insbesondere konventionelle Automatisierungsgeräte, wie speicherprogrammierbare Steuerungen und IO-Geräte, die in an sich bekannter Weise der Überwachung und Steuerung eines technischen Prozesses dienen.

Zumindest auf einigen der Knoten 2 des Clusters 1 sind Software-Container 3 vorhanden. Die beiden in Figur 1 beispielhaft gezeigten Knoten 2 sind beide Container 3 aufweisende Knoten 2.

Eine Eigenschaft von industriellen Clustern 1 ist oftmals, dass ein Teil der darin ablaufenden Applikationen mit der existierenden heutigen "klassischen" Gerätewelt der Automatisierungstechnik kommunizieren muss. Insbesondere ist die Automatisierungswelt heute im Gegensatz zu typischen IT-Cluster-Applikationen immer noch durch eine große Vielzahl spezieller Kommunikationsprotokolle auf IP- oder sogar Ethernet-Ebene gekennzeichnet. Kommt es zu Kommunikationsproblemen zwischen Containern mit Automatisierungs-bezogen Aufgaben und/oder Funktionen oder zwischen Containern 3 und den heutigen Automatisierungsgeräten, dann werden Diagnosewerkzeuge für die Kommunikation bis hinunter zu den IP- und Ethernet-Schichten benötigt.

Aus dem Stand der Technik sind Netzwerkpakete-Aufzeichnungswerkzeuge prinzipiell vorbekannt. Ein Beispiel ist Wireshark. Diese entstammen jedoch aus einer nicht oder nur wenig virtualisierten Einzelsystem-Welt.

Sowohl Anwendern als auch Entwicklern von containerisierten und geclusterten Automatisierungslösungen soll ein kontrollierter und vereinfachter Zugriff auf die "lebendigen" Netzwerk-Pakete in solchen Clustern bereitgestellt werden, insbesondere ohne dass hierfür detailliertes Fachwissen über die virtuellen Kommunikationsstrukturen in Clustern 1 erforderlich ist.

Hierfür bietet die vorliegende Erfindung eine Lösung. Sie ermöglicht es, dass vorbekannte Werkzeuge zur Netzwerkanalyse- und -diagnose einen möglichst einfachen Zugang zum Mitschnitt von Netzwerk-Paketen in dem Cluster 1 erhalten.

Dafür ist der Cluster 1 einerseits mit einem Cluster-Erfassungsmodul 4 (kann auch als Cluster-Capture-Modul, kurz CCM bezeichnet werden) ausgestattet. Darüber hinaus umfassen diejenigen Knoten 2 des Clusters 1, auf denen Container 3 vorhanden und/oder ggf. noch vorzusehen sind, jeweils ein Knoten-Discoverymodul 5 (kurz DM) und ein Knoten-Erfassungsmodul 6 (kurz CM). Bei dem dargestellten Ausführungsbeispiel haben alle Knoten 2 jeweils ein solches Modul 5, 6.

Sämtliche Module 4, 5, 6 sind vorliegend Software-implementiert. Die Knoten-Discovery- und Knoten-Erfassungsmodule 5, 6 sind jeweils auf dem Knoten 2 implementiert, dem sie zugeordnet sind und das Cluster-Erfassungsmodul 4 ist auf einem - ggf. auch anderen- Knoten 2 des Clusters 1 implementiert. Vorliegend sind die Knoten-Discovery- und Knoten-Erfassungsmodule 5, 6 ihrerseits als Container umgesetzt, konkret als zwei Container 3 eines einzigen Pods 7, wobei dies rein beispielhaft und nicht einschränkend zu verstehen ist.

Das Cluster-Erfassungsmodul 4 stellt einen Cluster-weiten Erfassungsservice bzw. -dienst dar und ist auf dem Cluster logisch einmal vorhanden. Es kann sein, dass das Cluster-Erfassungsmodul 4 in aus dem Bereich der allgemeinen IT an sich vorbekannter Weise horizontal skaliert wird bzw. ist, indem es mehrfach (beispielsweise auch auf verschiedenen Arbeitsknoten) gleichzeitig implementiert ist bzw. ausgeführt wird. In der Figur 1 ist dies durch weitere Cluster-Erfassungsmodul-Exemplare 4 mit gestrichelter Linie angedeutet.

Die Knoten-Discovery- und Erfassungsmodule 5, 6 implementieren knotenspezifische Dienste bzw. Services. Die Discoverymodule 5 implementieren für den jeweiligen Knoten 2 einen Discovery-service zur Ermittlung einer Konfiguration des jeweiligen Knotens 2. Das Cluster-Erfassungsmodul 4 dient insbesondere der Integration der einzelnen knotenspezifischen Services.

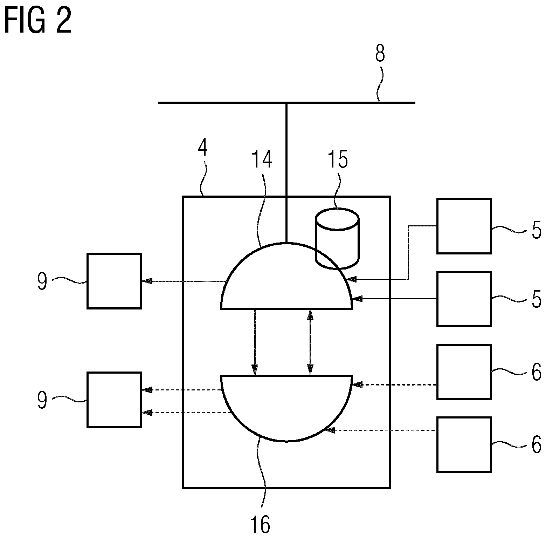

Das Cluster-Erfassungsmodul 4 besitzt Zugriff auf die Cluster Control Plane 8 (siehe Figur 2) des Clusters 1. Unter Zugriff auf die Cluster-Control-Plane 8 ermittelt es sämtliche im Cluster 1 vorhandenen bzw. verfügbare Knoten-Erfassungsmodule 6 sowie Knoten-Discoverymodule 5. Dies kann einmal, etwa bei erster Aktivierung des Cluster-Erfassungsmoduls 4 erfassen. Es kann auch zyklisch und/oder ereignisgesteuert erfolgen, so dass das Cluster-Erfassungsmodul 4 immer die aktuell vorhandenen Knoten-Erfassungsmodule 6 sowie Knoten-Discoverymodule 5 kennt.

Es ist ferner ein Cluster-Erfassungs-Client 9 (kann auch als Cluster-Capture-Client, kurz CCC bezeichnet werden) vorgesehen. Dieser dient dazu, Anfragen zum "capturen", mit anderen Worten "Mitschneiden" von Netzwerkpaketen in Containern 3 von Knoten 2 des Clusters 1 von einem Netzwerk-Analysewerkzeug 10 (kurz NA) entgegenzunehmen. Das Netzwerk-Analysewerkzeug 10 ist bei dem hier beschriebenen Beispiel durch Wireshark gegeben. Dieses ermöglicht nicht nur die Anzeige, sondern auch das Filtern anhand vielfältiger Kriterien sowie das Berechnen von statistischen Informationen (z.B. Anzahl der Pakete usw.). Der Cluster-Erfassungs-Client 9 ist vorliegend als prinzipiell vorbekanntes "extcap" Plugin für Wireshark ausgestaltet, wobei dies rein beispielhaft zu verstehen ist.

Bei dem dargestellten Beispiel sind der Cluster-Erfassung-Client 9 und das Netzwerk-Analysewerkzeug 10 auf einer virtuellen Maschine 11 implementiert, die zu dem Cluster 1 separat, konkret auf einem zu dem Cluster 1 separaten Rechner vorgesehen ist. Dies ist jedoch nur beispielhaft zu verstehen. Der Cluster-Erfassung-Client 9 und/oder das Netzwerk-Analysewerkzeug 10 können prinzipiell auch Cluster-interne Anwendungen sein.

Unter Durchführung des im Folgenden beschriebenen Ausführungsbeispiel des erfindungsgemäßen Verfahrens zur Diagnose des Datenverkehrs in einem insbesondere industriellen Cluster 1 können Datenpakete in Containern 3 der Knoten 2 erfasst werden.

Dabei erhält das Cluster-Erfassungsmodul 4 zunächst Informationen zu den Konfigurationen von vorliegend sämtlichen Knoten 2 des Clusters 1, konkret unter Durchführung eines Ausführungsbeispiels des erfindungsgemäßen Verfahrens zur Ermittlung einer Konfiguration eines oder mehrerer Arbeitsknoten 2 eines insbesondere industriellen Clusters 1 von den Knoten-Discoverymodulen 5 vorliegend sämtlicher Knoten 2.

Im Rahmen dieses erfasst das jeweilige Knoten-Discoverymodul 5 konfigurationslos, vorliegend auf Aufforderung durch das Cluster-Erfassungsmodul 4 die aktuell auf dem zugeordneten Knoten 2 vorhandenen Container 3 bevorzugt inklusive eventueller Container-Gruppen, sprich: "Pods" 7, deren Zuordnung zu (virtuellen) Netzwerk-, vorliegende IP-Stacks 12 sowie die Netzwerk-Schnittstellen der jeweiligen (virtuellen) IP-Stacks 12.

Bevorzugt werden von dem jeweiligen Knoten-Discoverymodul 5 dann jeweils alle insbesondere virtuellen IP-Stacks 12 des jeweiligen Knotens 2 erfasst, insbesondere auch solche (virtuellen) IP-Stacks 12, die keinem Container/Pod 3, 7 zugeordnet sind, wie beispielsweise der initiale "root" IP-Stack des Betriebssystems.

Die Erfassung sämtlicher IP-Stacks 12 erfolgt vorliegend, indem die Prozesstabelle des Betriebssystems des jeweiligen Knotens 2 mit den darin enthaltenen Verweisen auf die von den Prozessen zugeordneten IP-Stacks 12 ausgelesen werden. Das Auslesen kann beispielsweise über "/proc/$PID/ns/net" erfolgen. Als Ergebnis wird dann eine Liste erhalten, die von ggf. vorhandenen Duplikate befreit wird.

Weiterhin werden die aktuell aktiven Mounts ("/proc/$PID/mountinfo") des Betriebssystems des jeweiligen Knotens 2 ausgelesen und nur diejenigen Einträge berücksichtigt, die das "namespace"-Dateisystem betreffen. In der Regel können nur diese auf (virtuelle) IP-Stacks 12 verweisen. Auf diese Weise werden auch (virtuelle) IP-Stacks 12 erfasst, denen aktuell kein(e) Prozess(e) zugeordnet sind. Die so gefundenen Einträge werden bevorzugt in die bisherige Liste der gefunden IP-Stacks 12 eingepflegt, sofern es sich nicht um Duplikate handelt.

Von dem jeweiligen Knoten-Discoverymodul 5 werden dann für jeden einzelnen (virtuellen) IP-Stack 12 dessen aktuell vorhandenen Netzwerk-Schnittstellen erfasst und diese ihren zugehörigen IP-Stacks 12 zugeordnet.

Das jeweilige Knoten-Discoverymodul 5 ordnet den erfassten Netzwerk-Stacks 12 auch Namen zu. Dabei wird Stacks 12, die von einem oder mehreren Prozessen genutzt werden der Name eines dieser Prozesse zugeordnet, konkret der Name desjenigen Prozesses, der im Prozessbaum am weitesten oben steht. Netzwerk-Stacks 12, die von keinem Prozess genutzt werden ("Prozess-lose" Stacks) wird der Name desjenigen Dateisystem-Pfads zugeordnet, anhand dem der jeweilige Netzwerk-Stack 12 beim Durchsuchen aller Mount-Positionen des "nsfs"-Dateisystem auffindbar ist bzw. aufgefunden wurde ("bindmount").

Danach werden von dem jeweiligen Knoten-Discoverymodul 5 alle Container/Pods 3 in dem jeweiligen Knoten 2 erfasst.

Hierfür kann das (jeweilige) Knoten-Discoverymodul 5 die Container-Engine des jeweiligen Knotens 2, welche in an sich bekannter Weise die Verwaltung der Container 3 übernimmt und beispielsweise durch docker gegeben sein kann, kontaktieren und von dieser eine Liste mit den auf dem Knoten 2 vorhandenen Containern 3 erhalten. Dies kann beispielsweise erfolgen, indem über wenigstens einen geeigneten Steuerkanal, z.B. einen geeigneten Unix Socket, auf eine von der Container-Engine geführte Liste der vorhandenen Container 3 zugegriffen wird. Zweckmäßiger Weise werden auch die zu den Containern gehörigen Prozesskennungen (PIDs) ermittelt bzw. abgerufen und/oder zu den Containern 3 gehörige Namen, insbesondere Namen, die von der Container-Engine genutzt werden, die den Containern 3 aus applikativer Sicht und/oder anwenderseitig gegeben wurden.

Je nach verwendeter Container-Engine (wie beispielsweise Docker), können dann noch die Container 3 automatisch anhand eines festen, bekannten Namensschemas ihren Pods 7 zugeordnet werden, sofern die Container-Engine diese Zuordnung nicht bereits selbst verwaltet.

Für jeden erfassten Container 3 beziehungsweise Pod 7 kann dann insbesondere anschließend der von ihm verwendete IP-Stack 12 über den Weg der Prozesstabelle des Betriebssystems ermittelt werden (insbesondere über "/proc/$PID/ns/net") und diese Zuordnung wird bevorzugt gespeichert. Hier werden zweckmäßiger Weise die zuvor ermittelten Prozesskennungen (PIDs) der Container 3 herangezogen. Damit sind dann für die erfassten Container 3 bzw. Pods 7 auch die jeweils zugehörigen Netzwerk-Schnittstellen bekannt. Denn ist bekannt, welcher Container/Pod 3, 7 welchem IP-Stack 12 zugeordnet ist, und welche Netzwerkschnittstellen zu welchem IP-Stack 12 gehören, ist auch bekannt, welche Netzwerkschnittstelle(n) zu welchem Container 3 gehört bzw. gehören.

Das (jeweilige) Knoten-Discoverymodul 5 liefert mit anderen Worten bevorzugt die vollständigen Informationen, also sowohl die Zuordnungen Pod-Container als auch die Zuordnungen Container-IPStack und bestimmt und liefert zusätzlich auch die Zuordnung Pod-IPStack.

Es sei angemerkt, dass alle IP-Stacks 12, die nicht mindestens einen Container 3 bzw. Pod 7 haben, bevorzugt als solche markiert werden.

Insbesondere eine Dienste-Schnittstelle des jeweiligen Knoten-Discoverymoduls 5 kann über ein HTTP REST API die erfassten Informationen zur Verfügung stellen. Bevorzugt wird eine Liste 13 aller Container/Pods 3, 7 jeweils mit den Namen den ihnen zugeordneten Netzwerk-Schnittstellen und außerdem der eindeutigen Kennung des jeweiligen (virtuellen) IP-Stacks 12, vorliegend einer inode-Nummer des jeweiligen Stacks 12, zur Verfügung gestellt.

Vorliegend erfolgt seitens des Cluster-Erfassungsmoduls 4 ein HTTP-Request an jedes der vorhandenen Knoten-Discoverymodule 5, welches z.B. jeweils lauten kann
GET /discover HTTP/1.1
Host: ew2.cluster
Cache-Control: max-age=0

Dies ist konkret ein HTTP REST-Aufruf des API-Endpunkts /discover.

Die Antwort die gefundenen IP-Stacks 12, Container 3, usw. beispielsweise in Form einer JSON-Datenstruktur enthalten. Eine Antwort in Form eines http-Response des (jeweiligen) Knoten-Discoverymoduls 5 kann dann beispielsweise lauten:

```
     HTTP/1.1 200 OK
     Content-Type: application/json
     {
       "targets": [
         {
           "name": "containerx",
           "ipstack": "4026532600",
           "network-interfaces": [
             "eth0",
             "mlan",
             "lo"
           ],
           "path": "",
           "pid": 42,
           "type": "container"
       },
       ...
    ]
  }
```

In der Figur 1 ist die zur Verfügung Stellung dieser Information durch das jeweiligen Knoten-Discoverymodul 5 an das Cluster-Erfassungsmodul 4 über einen das jeweilige Knoten-Discoverymodul 5 und das Cluster-Erfassungsmodul 4 verbindenden Pfeil, neben dem ein eine solche Liste repräsentierendes Blockelement 13 dargestellt ist, schematisch angedeutet. Die Information über markierte IP-Stacks 12, die keinen Container 3 haben, kann ebenfalls in der jeweiligen Liste 13 übermittelt werden.

Das Cluster-Erfassungsmodul 4, bei dem dargestellten Ausführungsbeispiel eine Aggregationseinheit 14 (kurz AG, siehe Figur 2) dieses, führt die von den Knoten-Discoverymodulen 5 der mehreren Knoten 2 erhaltenen Informationen, konkret Listen 13 zu einem Gesamtkatalog bzw. Gesamt-Informationsmodell 15 zusammen (siehe Figur 2). Dieser Gesamtkatalog 15 enthält bevorzugt die Namen aller Container/Pods 3, 7, die Kennungen (IDs), vorliegend inode-Nummern der ihnen jeweils zugeordneten (virtuellen) IP-Stacks 12, die Namen der dazu gehörigen Netzwerk-Schnittstellen sowie eine Referenz auf das jeweils zuständige Knoten-Erfassungsmodul 6, beispielsweise in Form einer IP-Adresse.

Der Gesamtkatalog 15 kann beispielsweise über ein HTTP REST API von dem Cluster-Erfassungs-Client 9 abgerufen werden, was in der Figur 1 wiederum durch einen entsprechenden Pfeil mit daneben dargestelltem Gesamtkatalog 15 schematisch angedeutet ist.

Die Aggregationseinheit 14 konfiguriert ferner für die im Cluster 1 vorhandenen Knoten-Erfassungsmodule 6 Routen, insbesondere HHTP- und/oder Websocket-Proxy-Routern. So wird es möglich, dass die Adressen, insbesondere IP-Adressen der Knoten-Erfassungsmodule 6 rein Cluster-intern bleiben und anfragende Module wie, der Cluster-Erfassungs-Client 9 müssen nur einen einzigen Ansprechpunkt kennen, das Cluster-Erfassungsmodul 4.

Das Cluster-Erfassungsmodul 4 umfasst vorliegend ferner einen Reverse-Proxy 16 (kurz RP, siehe Figur 2), welcher von dem Cluster-Erfassungs-Client 9 stammende Anfragen jeweils an das zugehörige Knoten-Erfassungsmodul 6 weiterleitet. Dabei kann der Reverse-Proxy 16 einerseits Anfragen zum Gesamtkatalog 15 gezielt an die Aggregationseinheit 14 weiterleiten, während Anfragen an Knoten-Erfassungsmodule 6 entsprechend an diese weitergeleitet werden.

Bevorzugt ist der Ablauf derart, dass der Cluster-Erfassungs-Client 9 beim Cluster-Erfassungsmodul 4 den Gesamtkatalog anfragt. Im Cluster-Erfassungsmodul 4 läuft diese Anfrage auf den Reverse-Proxy 16 auf, der diese an die Aggregationseinheit 14 weiterleitet. Der Reverse-Proxy 16 kann dabei auch als eine Kombination aus einem Reverse Proxy und einem sogenannten ServeMux (siehe z.B. https://golang.org/pkg/net/http/) ausgeführt sein. Hierbei durchlaufen dann eingehende http-Anfragen zunächst den ServeMux, der dann anhand des URL Pfads entweder direkt in die Aggregationseinheit 14 überleitet oder aber per ReverseProxy die Anfrage an ein Knoten-Discoverymodul 5 bzw. Knoten-Erfassungsmodul 6 weiterleitet.

Der Cluster-Erfassungs-Client 9 fragt den Gesamtkatalog bevorzugt ab, um darüber einem Anwender beispielsweise einen Auswahldialog verfügbarer Pods 7/Container 3 und deren Netzwerkschnittstellen zu präsentieren.

Es sei angemerkt, dass in der Figur 2 rechts des Cluster-Erfassungsmoduls 4 nochmals die Knoten-Discovery- und -Erfassungsmodule 5, 6, sowie links davon der Cluster-Erfassungs-Client 9 schematisch dargestellt und diese verbindende Pfeile mit durchgezogener bzw. gestrichelter Linie in Analogie zu Figur 1 den Informations- bzw. Paketfluss bzw. die zugehörigen Kanäle/Verbindungen veranschaulichen.

Wenn das Netzwerk-Analysemodul 10 den Cluster-Erfassungs-Client 9 kontaktiert und eine Anfrage für das Mitschneiden von Datenpaketen in wenigstens einem Container 3 eines Knotens 2 stellt, stellt der Cluster-Erfassungs-Client 9 eine Verbindung zu dem Cluster 1, konkret zu dem Cluster-Erfassungsmodul 4 her, bevorzugt inklusive Authentifizierung, und richtet die Anfrage an diesen. Dann empfängt das Cluster-Erfassungsmodul 4 von dem Cluster-Erfassungs-Client 9 als anfragendes Modul eine Anfrage für das Erfassen von Datenpaketen in wenigstens einem der Container 3 und/oder wenigstens einem der Pods 7 und/oder an wenigstens einem der Netzwerk-Stack 12. Das Cluster-Erfassungsmodul 4 kann beispielsweise per "Cluster-URL" beziehungsweise der Dienste-URL des Cluster-Erfassungs-Moduls 4 eindeutig identifiziert und damit auch adressiert werden.

Es sind zumindest die folgenden vier Arten von Anfragen möglich.

Einerseits sind Anfragen für das Erfassen von Datenpaketen in einem Pod 7 möglich, die dann den Namen des Pods 7 enthalten. Die zusätzliche Angabe einer Kennung bzw. des Namens des zugehörigen Knotens 2 ist nicht erforderlich. In Reaktion auf eine solche Anfrage schlägt das Cluster-Erfassungsmodul 4 in dem Gesamtkatalog 15 den Pod-Namen nach und entnimmt die zugehörige Kennung des IP-Stacks 12, vorliegend dessen dort hinterlegte inode-Nummer, und den ebenfalls dort hinterlegten zugehörigen Knoten 2. Es kontaktiert das Knoten-Erfassungsmodul 6 dieses Knotens 2 und übermittelt diesem die inode-Nummer des zum gewünschten Pod 7 gehörigen Netzwerk-Stacks 12.

Anfragen für die Paketerfassung in einem einzelnen Container 3 umfassen den Namen des Containers 3 und die Angabe des Knotens 2, auf welchem sich dieser befindet. Auf solche Anfragen hin ermittelt das Cluster-Erfassungsmodul 4 aus dem Gesamtkatalog 15 wiederum die Kennung, konkret inode-Nummer des zugehörigen IP-Stacks 12. Es kontaktiert das Knoten-Erfassungsmodul 6 des Knotens 2, der in der Anfrage angegeben war, und übermittelt diesem die inode-Nummer des zum gewünschten Container 3 gehörigen Netzwerk-Stack 12.

Anfragen für die Erfassung an bzw. in einem Prozess-losen Netzwerk-, vorliegen IP-Stack 12 enthalten den Namen des Stacks 12 und zusätzlich die Angabe des Knotens, dem der Stack 12 zugeordnet ist. Der in Anfragen dieser Art enthaltene Stack-Name ist durch den Dateisystem-Pfadgegeben, anhand dem der Prozess-lose Netzwerk-Stack beim Durchsuchen aller Mount-Positionen des "nsfs"-Dateisystem auffindbar ist ("bindmount"). Für Anfragen dieser ermittelt das Cluster-Erfassungsmodul 4 aus dem Gesamtkatalog 15 ausgehend von dem Stack-Namen wiederum die inode-Nummer des zugehörigen Stacks, kontaktiert das Knoten-Erfassungsmodul 6 des in der Anfrage genannten Knotens 2 und übermittelt diesem die inode-Nummer.

Anfragen für die Erfassung an bzw. in IP-Stacks 12 mit einem oder mehreren Prozessen umfassen den Namen desjenigen den Stack 12 nutzenden Prozesses, der im Prozessbaum am weitesten oben steht und zusätzlich die Angabe des Knotens 2, dem der Stack 12 zugeordnet ist. Auch für diese ermittelt das Cluster-Erfassungsmodul 4 unter Rückgriff auf den Gesamtkatalog 15 die zugehörige inode-Nummer, kontaktiert das Knoten-Erfassungsmodul 6 des angegebenen Knotens 2 und lässt diesem die inode-Nummer zukommen.

Es sei angemerkt, dass alternativ oder zusätzlich dazu, dass das Cluster-Erfassungsmodul 4 die aus dem Gesamtkatalog 15 ermittelte inode-Nummer an das jeweilige Knoten-Erfassungsmodul 5 übermittelt, dieses prinzipiell auch den Namen des Containers 3 bzw. Pods 7 bzw. Stacks 12 übermittelt bekommen kann und dann - insbesondere unter Zuhilfenahme des Knoten-Discoverymodul 5 des Knotens 2- die inode-Nummer des zugehörigen Netzwerk-Stacks 12 selber ermittelt.

Das Knoten-Erfassungsmodul 6 erfasst, nachdem es vom Cluster-Erfassungsmodul 4 kontaktiert wurde und die inode-Nummer (und/oder den Name) erhalten hat, die Datenpakete an der oder den Netzwerkschnittstellen des betroffenen Netzwerk-Stacks 12. Im Falle der Anfrage für einen Container 3 bzw. Pod 7 somit desjenigen Netzwerk-Stacks 12, der dem betroffenen Container 3 bzw. Pod 7 zugeordnet ist. Das (jeweilige) Knoten-Erfassungsmodul 4 startet bevorzugt nach dem erfolgreiche Verbindungsaufbau des Cluster-Erfassungs-Clients 9 an das Cluster-Erfassungsmodul 4, beispielsweise über einen sogenannten "websocket", das Erfassen von Netzwerk-Paketen am insbesondere beim Verbindungsaufbau spezifizierten (virtuellen) Stack 12 und den gewünschten Schnittstellen.

Ein Websocket-Request des Cluster-Erfassungsmoduls 4 an ein Knoten-Erfassungsmodul 6 kann beispielsweise wie folgt aussehen:

```
     GET
     /capture?ipstack=4026532600&networkinterfaces=eth0+mlan
     Host: ew2.cluster
     Upgrade: websocket
     Connection: Upgrade
     ...
```

Wurde die Paketaufzeichnung erfolgreich gestartet, dann quittiert das Knoten-Erfassungsmodul 6 den Aufbauwunsch des Websockets bevorzugt positiv und beginnt, Pakete als Datenstrom gemäß Websocket-Protokoll zu übertragen.

Eine HTTP-Response des Knoten-Erfassungsmoduls 4 kann beispielsweise lauten:

```
     HTTP/1.1 101 Switching Protocols
     Upgrade: websocket
     Connection: Upgrade
     ...
     ...Websocket Datenstrom...
```

Mit der Meta-Anmerkung in der letzten Zeile "...Websocket Datenstrom..." ist angedeutet, dass hier binäre Daten des Webspocket-Protokolls beginnen. Die vorherige Leerzeile markiert das Ende des HTTP-kompatiblen Antwortkopfes.

Der Cluster-Erfassungs-Client 9 kann zusätzlich das Vorfiltern erfasster Pakete bzw. zugehöriger Duplikate veranlassen.

Das Erfassen der Pakete kann dabei mit vorbekannten Mitteln bzw. Tools wie z.B. tcpdump bewerkstelligt werden, wobei das bzw. das jeweilige Knoten-Erfassungsmodul 6 vor dem Aufruf eines solchen Werkzeugs zweckmäßiger Weise zunächst automatisch zu dem erforderlichen bzw. gewünschten IP-Stack 12 wechselt, so dass vorhandene Werkzeuge ohne Wissen über virtuelle IP-Stacks 12 transparent auf den jeweils gewünschten IP-Stack 12 aufgeschaltet werden können.

Es kann sein, dass die dem (jeweiligen) Knoten-Erfassungsmodul 6 mitgeteilte (und/oder von diesem selber ermittelte) inode-Nummer von einem Werkzeug, welches das (jeweilige) Knoten-Erfassungsmodul 6 nutzt, um in den jeweiligen Stack 12 zu wechseln, z.B. "nsenter", nicht direkt verarbeitet werden kann. Daher kann vorgesehen sein, dass das (jeweilige) Knoten-Erfassungsmodul 6 die inode-Nummer zunächst umwandelt, bevorzugt in einen Pfadnamen im Dateisystem des Knotens 2. Dazu durchsucht das (jeweilige) Knoten-Erfassungsmodul bevorzugt die von Prozessen benutzten Netzwerk-Namensräume (Network Namespaces), insbesondere, indem alle Verweise in "/proc/$PID/ns/net" überprüft werden, ob sie auf den gesuchten Netzwerk-Stack 12 bzw. dessen inode verweisen. Hierbei wird bevorzugt der Reihe nach $PID durch alle PIDs der aktuell laufenden Prozesse ersetzt. Weiterhin bevorzugt werden alle Mount-Positionen des "nsfs"-Dateisystems durchsucht, ob diese Mount-Positionen auf den gesuchten Netzwerk-Stack 12 bzw. dessen inode verweisen. Das Auffinden der Mount-Positionen erfolgt dabei zweckmäßiger Weise über das Auswerten von "/proc/$PID/mountinfo"-Pseudodateien für alle PIDs der aktuell laufenden Prozesse. Hierbei können auch solche Mount-Positionen von Netzwerk-Stacks 12 gefunden werden, denen kein Prozess zugeordnet ist, weil die Mount-Positionen selbst immer Prozessen zugeordnet sind. Das Ergebnis dieser Suche ist dann bevorzugt ein Dateisystem-Pfad, der auf den per inode gesuchten Netzwerk-Stack 12 verweist und der an ein Werkzeug wie "nsenter" übergeben werden kann, etwa durch "nsenter - net=<pfad>...", um in den gewünschten bzw. zugehörigen Netzwerk-Stack 12 zu wechseln und dann dort die Datenpakete zu erfassen.

Das Knoten-Erfassungsmodul 6 leitet die erfassten Datenpakete bzw. Duplikate dieser an das Cluster-Erfassungsmodul 4 weiter, "streamt" diese mit anderen Worten an das Cluster-Erfassungsmodul 4. Dies ist in Figur 1 durch gestrichelte Pfeile 1 schematisch angedeutet, welche das jeweilige Knoten-Erfassungsmodul 6 mit dem Cluster-Erfassungsmodul 4 verbinden und neben denen beispielhaft zwei erfasste Datenpakete bzw. zugehörige Duplikate als mit dem Bezugszeichen 18 versehene Blockelemente gezeigt sind. Die Pfeile stellen zugehörige Paketkanäle 17 schematisch dar.

Das Cluster-Erfassungsmodul 4 streamt die Datenpakete bzw. zugehörigen Duplikate 18 über einen Paketkanal 17 an den Cluster-Erfassungs-Client 9 und dieser die Datenpakete bzw. zugehörigen Duplikate 18 über einen Paketkanal 17 an das Netzwerk-Analysemodul 10.

Das jeweilige Knoten-Erfassungsmodul 6 kann das Erfassen und Streaming von Paketen zwischenzeitlich anhalten und wieder fortsetzen. Ein Pausieren sowie Fortsetzen kann von dem Netzwerk-Analysemodul 10 initiiert werden, woraufhin der Cluster-Erfassungs-Client 9 entsprechende Steuerkommandos über das Cluster-Erfassungsmodul 4 an das (jeweilige) Knoten-Erfassungsmodul 6 übermittelt. Hierfür ist einerseits ein Steuerkanal 19 zwischen dem Netzwerk-Analysemodul 10 und dem Cluster-Erfassungs-Client 7 vorgesehen. Zwischen dem Cluster-Erfassungs-Client 9 und dem Cluster-Erfassungsmodul 4 und dem Cluster-Erfassungsmodul 4 und jeweiligen Knoten-Erfassungsmodul 6 werden Steuerkommandos vorliegend über die bereits für das Streaming der Duplikate 18 aufgebaute Verbindungen 17 übertragen werden.

Zweckmäßiger Weise beendet das (jeweilige) Knoten-Erfassungsmodul 6 das Erfassen und Weiterleiten von Paketen bzw. Duplikaten 18, wenn das beim Cluster-Erfassungsmodul 4 anfragende Modul, vorliegend der Cluster-Erfassungs-Client 9, die Verbindung beendet.

In bevorzugter Ausgestaltung verfügt das (jeweilige) Knoten-Erfassungsmodul 6 über eine konfigurierbare Beschränkung der gleichzeitig aktiven Paketströme, um insbesondere bei mehrfachen parallelen Verbindungen 17 die Last zu beschränken.

Es sei angemerkt, dass die Weiterleitung der erfassten Datenpakete bzw. zugehörigen Duplikate 18 an das Cluster-Erfassungsmodul 4, den Cluster-Erfassungs-Client 9 und das Netzwerk-Analysemodul 10 bevorzugt "online" bzw. "live" erfolgt, insbesondere noch während ein Erfassungsvorgang andauert.

Die beschriebene Vorgehensweise bietet mehrere Vorteile. Es wird u.a. "Capture as a Service" realisiert und das Erfassen von "lebendigen" Netzwerkpaketen im Cluster 1 und Streaming der Pakete bzw. zugehörigen Duplikate 18 auch aus dem Cluster 1 heraus mit Standard-Cluster-Mechanismen wird ermöglicht. Anwender können ihre bekannten Desktop-Applikationen, wie beispielsweise Wireshark, weiterhin nutzen. Es sind keine speziellen SSH-Sitzungen und spezielle Zugänge zu den einzelnen Arbeitsknoten 2 des Clusters 1 erforderlich. Auch müssen vorhandene Container 3 bzw. Pods 7 nicht extra angepasst oder neugestartet werden, um Netzwerkpakete zu erfassen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Diagnose des Datenverkehrs in einem insbesondere industriellen Cluster (1) mit mehreren Arbeitsknoten (2), wobei auf einem oder mehreren der Knoten (2) jeweils einer oder mehrere Container (3) und/oder Pods (7) vorhanden sind, und wobei einem oder mehreren der Knoten (2) jeweils ein Knoten-Erfassungsmodul (6) und dem Cluster (1) ein Cluster-Erfassungsmodul (4) zugeordnet ist, bei dem
a) das Cluster-Erfassungsmodul (4) Informationen darüber erhält oder erhalten hat, welchen der Knoten (2) jeweils ein Knoten-Erfassungsmodul (6) zugeordnet ist, und welche Netzwerk-Stacks (12) der oder der jeweilige dieser Knoten (2) aufweist und welcher oder welche Container (3) und/oder Pods (7) auf dem oder dem jeweiligen dieser Knoten (2) vorhanden sind, und, sofern vorhanden, welcher Container (3) und/oder welcher Pod (7) des oder des jeweiligen dieser Knoten (2) welchem Netzwerk-Stack (12) des oder des jeweiligen dieser Knoten (2) zugeordnet ist,
b) das Cluster-Erfassungsmodul (4) von einem anfragenden Modul (9) eine Anfrage für das Erfassen von Datenpaketen an wenigstens einem Netzwerk-Stack (12) und/oder in wenigstens einem Container (3) und/oder Pod (7) wenigstens eines dieser Knoten (2), betroffener Knoten (2), empfängt, wobei die Anfrage eine dem wenigstens einen Netzwerk-Stack (12) zugeordnete Kennung und/oder eine dem wenigstens einen Container (3) und/oder dem wenigstens einen Pod (7) zugeordnete Kennung umfasst,
c) das Cluster-Erfassungsmodul (4) das Knoten-Erfassungsmodul (6) des wenigstens einen betroffenen Knotens (2) kontaktiert und das Knoten-Erfassungsmodul (6) Datenpakete an der oder den Netzwerkschnittstellen des wenigstens einen Netzwerk-Stacks (12), dessen Kennung in der Anfrage angegeben ist, erfasst, und/oder das Knoten-Erfassungsmodul (6) Datenpakete an der oder den Netzwerkschnittstellen des wenigstens einen Netzwerk-Stacks (12), der dem wenigstens einen Container (3) und/oder der dem wenigstens einen Pod (7), dessen Kennung in der Anfrage angegeben ist, zugeordnet ist, erfasst,
d) das Knoten-Erfassungsmodul (6) des wenigstens einen betroffenen Knotens (2) die erfassten Datenpakete bzw. Duplikate (18) dieser an das Cluster-Erfassungsmodul (4) weiterleitet, und
e) das Cluster-Erfassungsmodul (4) die erfassten Datenpakete bzw. Duplikate (18) dieser an das anfragende Modul (9) weiterleitet.

2. Verfahren nach Anspruch 1,
**dadurch gekennzeichnet, dass**
das Cluster-Erfassungsmodul (4) in Schritt b) eine Anfrage zum Erfassen von Datenpaketen an wenigstens einem Netzwerk-Stack (12) erhält, und die Anfrage als die dem wenigstens einen Netzwerk-Stack (12) zugeordnete Kennung einen Namen des wenigstens Netzwerk-Stacks (12) oder eines den wenigstens einen Netzwerk-Stack (12) nutzenden Prozesses enthält,
und/oder
das Cluster-Erfassungsmodul (4) in Schritt b) eine Anfrage zum Erfassen von Datenpaketen in wenigstens einem Container (3) und/oder wenigstens einem Pod (7) erhält, und die Anfrage als die dem wenigstens einen Container (3) und/oder die dem wenigstens einen Pod (7) zugeordnete Kennung einen Namen des wenigstens einen Containers (3) und/oder einen Namen des wenigstens einen Pods (7) enthält.

3. Verfahren nach Anspruch 1 oder 2,
**dadurch gekennzeichnet, dass**
das Cluster-Erfassungsmodul (4) in Schritt b) eine Anfrage zum Erfassen von Datenpaketen an wenigstens einem Netzwerk-Stack (12) erhält, und die Anfrage zusätzlich zu der dem wenigstens einen Netzwerk-Stack (12) zugeordneten Kennung die Angabe desjenigen Knotens (2) enthält, dem der wenigstens eine Netzwerk-Stack (12) zugeordnet ist, und das Cluster-Erfassungsmodul (4) in Schritt c) das Knoten-Erfassungsmodul (6) dieses Knotens (2) kontaktiert.

4. Verfahren nach einem der vorhergehenden Ansprüche,
**dadurch gekennzeichnet, dass**
das Cluster-Erfassungsmodul (4) in Schritt b) eine Anfrage zum Erfassen von Datenpaketen in wenigstens einem Container (3) und/oder in wenigstens einem Pod (7) erhält, und das Cluster-Erfassungsmodul (4) anhand der enthaltenen Kennung des wenigstens einen Containers (3) und/oder des wenigstens einen Pods (7) und unter Rückgriff auf die gemäß Schritt a) erhaltenen Informationen den Knoten (2) ermittelt, dem der wenigstens eine Container (3) und/oder der wenigstens eine Pod (7), dessen Kennung in der Anfrage enthalten ist, zugeordnet ist, und in Schritt c) das Knoten-Erfassungsmodul (6) dieses Knotens (2) kontaktiert.

5. Verfahren nach einem der vorhergehenden Ansprüche,
**dadurch gekennzeichnet, dass**
das Cluster-Erfassungsmodul (4) in Schritt b) eine Anfrage zum Erfassen von Datenpaketen in wenigstens einem Container (3) und/oder in wenigstens einem Pod (7) erhält, und das Cluster-Erfassungsmodul (4) anhand der in der Anfrage enthaltenen Kennung des wenigstens einen Containers (3) und/oder des wenigstens einen Pods (7) und unter Rückgriff auf die gemäß Schritt a) erhaltenen Informationen den Netzwerk-Stack (12) bestimmt, welcher dem wenigstens einen Container (3) und/oder dem wenigstens einen Pod (7) zugeordnet ist, und dem Knoten-Erfassungsmodul (6) eine diesem Netzwerk-Stack (12) zugeordnete Kennung, insbesondere inode-Nummer übermittelt, und/oder
das Cluster-Erfassungsmodul (4) in Schritt b) eine Anfrage zum Erfassen von Datenpaketen an wenigstens einem Netzwerk-Stack (12) erhält, und anhand der enthaltenen Kennung und unter Rückgriff auf die gemäß Schritt a) erhaltenen Informationen eine weitere, von dieser Kennung verschiedene Kennung des Netzwerk-Stacks (12), insbesondere eine inode-Nummer dieses ermittelt und dem Knoten-Erfassungsmodul (6) die weitere Kennung übermittelt.

6. Verfahren nach Anspruch 5,
**dadurch gekennzeichnet, dass**
das Knoten-Erfassungsmodul (6) die vom Cluster-Erfassungsmodul (4) übermittelte Kennung und/oder weitere Kennung in einen Pfadnamen im Dateisystem des Knotens (2), dem das Knoten-Erfassungsmodul (6) zugeordnet ist, umwandelt.

7. Verfahren nach einem der vorhergehenden Ansprüche,
**dadurch gekennzeichnet, dass**
das Cluster-Erfassungsmodul (4) in Schritt b) eine Anfrage zum Erfassen von Datenpaketen an wenigstens einem Netzwerk-Stack (12) erhält, und das Knoten-Erfassungsmodul (4) in Schritt c) bevorzugt automatisch in denjenigen Netzwerk-Stack (12) wechselt, dessen Kennung in der Anfrage angegeben ist, und dann die Datenpakete an der oder den Netzwerkschnittstellen dieses Netzwerk-Stacks (12) erfasst, und/oder das Cluster-Erfassungsmodul (4) in Schritt b) eine Anfrage zum Erfassen von Datenpaketen in wenigstens einem Container (3) und/oder in wenigstens einem Pod (7) erhält, und das Knoten-Erfassungsmodul (4) in Schritt c) bevorzugt automatisch in denjenigen Netzwerk-Stack (12) wechselt, der dem wenigstens einen Container (3) und/oder dem wenigstens einen Pod (7), dessen Kennung in der Anfrage angegeben ist, zugeordnet ist, und dann die Datenpakete an der oder den Netzwerkschnittstellen dieses Netzwerk-Stacks (12) erfasst.

8. Verfahren nach einem der vorhergehenden Ansprüche,
**dadurch gekennzeichnet, dass**
das Cluster-Erfassungsmodul (4) die im Cluster (1) vorhandenen Knoten-Erfassungsmodule (6) ermittelt, wobei es hierzu auf eine Cluster-Kontrollebene zugreift, und/oder dass das Cluster-Erfassungsmodul (4) für eines oder mehrere der Knoten-Erfassungsmodule (6) Routen, bevorzugt HHTP- und/oder Websocket-Proxy-Routen konfiguriert, und/oder dass das Cluster-Erfassungsmodul (4) einen Reverse-Proxy (16) umfasst, welcher von dem anfragenden Modul (9) stammende Anfragen jeweils an das zugehörige Knoten-Erfassungsmodul (6) weiterleitet.

9. Verfahren nach einem der vorhergehenden Ansprüche,
**dadurch gekennzeichnet, dass**
zwischen dem Cluster-Erfassungsmodul (4) und dem oder dem jeweiligen Knoten-Erfassungsmodul (6) ein Kanal (13) für die Übertragung von erfassten Datenpaketen bzw. zugehörigen Duplikaten (18) von dem oder dem jeweiligen Knoten-Erfassungsmodul (6) zu dem Cluster-Erfassungsmodul (4) aufgebaut und für die Übertragung in Schritt d) genutzt wird, und/oder dass zwischen dem anfragenden Modul (9) und dem Cluster-Erfassungsmodul (4) ein Kanal (13) für die Übertragung von erfassten Datenpaketen bzw. zugehörigen Duplikaten (18) von dem Cluster-Erfassungsmodul (4) an das anfragenden Modul (9) aufgebaut und für die Übertragung in Schritt e) genutzt wird.

10. Verfahren nach einem der vorhergehenden Ansprüche,
**dadurch gekennzeichnet, dass**
das anfragende Modul (9) seinerseits von einem Netzwerk-Analysemodul (10) eine Anfrage für das Erfassen von Datenpaketen erhält und anschließend an das Cluster-Erfassungsmodul (4) übermittelt, und das anfragende Modul (9) die erfassten Datenpakete bzw. Duplikate (18) dieser, die er vom Cluster-Erfassungsmodul (4) erhalten hat bzw. erhält, an das Netzwerk-Analysemodul (10) weiterleitet.

11. Verfahren nach einem der vorhergehenden Ansprüche,
**dadurch gekennzeichnet, dass**
das Cluster-Erfassungsmodul (4) unter Durchführung des Verfahrens nach einem der Ansprüche 12 bis 16 Informationen darüber erhält oder erhalten hat, welche der Knoten (2) jeweils ein Knoten-Erfassungsmodul (6) aufweisen und welche Netzwerk-Stacks (12) der oder der jeweilige dieser Knoten (2) aufweist und welche Netzwerkschnittstellen die Netzwerk-Stacks (12) haben und welchen oder welche Container (3) und/oder Pods (7) der oder der jeweilige dieser Knoten (2) aufweist und, sofern Container (3) und/oder Pods (7) vorhanden sind, welcher Container (3) und/oder Pod (7) des oder des jeweiligen dieser Knoten (2) welchem Netzwerk-Stack (12) des oder des jeweiligen dieser Knoten (2) zugeordnet ist.

12. Verfahren zum Ermitteln einer Konfiguration eines oder mehrerer Arbeitsknoten (2) eines insbesondere industriellen Clusters (1), wobei auf einem oder mehreren der Arbeitsknoten (2) jeweils einer oder mehrere Container (3) vorhanden sind, wobei einem oder mehreren der Knoten (2) jeweils ein Knoten-Discoverymodul (5) und dem Cluster ein Cluster-Erfassungsmodul (4) zugeordnet ist, bei dem
aa) das oder das jeweilige Knoten-Discoverymodul (5) erfasst, welche Netzwerk-Stacks (12) der oder der jeweilige Knoten (2) aufweist und welche Netzwerkschnittstellen der oder der jeweilige Netzwerk-Stack (12) hat und welche Container (3) und/oder Pods (7) auf dem oder dem jeweiligen Knoten (2) vorhanden sind, und, sofern Container und/oder Pods (7) vorhanden sind, welcher Container (3) und/oder welcher Pod (7) des oder des jeweiligen Knotens (2) welchem Netzwerk-Stack (12) des oder des jeweiligen Knotens (2) zugeordnet ist,
bb) das Knoten-Erfassungsmodul (6) des oder des jeweiligen Knotens (2) dem Cluster-Erfassungsmodul (4) diese Informationen bevorzugt auf Anfrage des Cluster-Erfassungsmoduls (4) hin übermittelt.

13. Verfahren nach Anspruch 12,
**dadurch gekennzeichnet, dass**
das Cluster-Erfassungsmodul (4) die von den Knoten-Discoverymodulen (6) mehrerer Knoten (2) erhaltenen Informationen zusammenführt und speichert, insbesondere in einem Datensatz, welcher zumindest die auf den Knoten (2) vorhandenen Netzwerk-Stacks (12), deren Netzwerkschnittstellen, die auf den Knoten (2) vorhandenen Container (3) und/oder Pods (7) und bevorzugt Referenzen auf die jeweils zugehörigen Knoten-Erfassungsmodule (5) aufführt.

14. Verfahren nach Anspruch 13,
**dadurch gekennzeichnet, dass**
das Cluster-Erfassungsmodul (4) eine Aggregationseinheit (14) umfasst, welche die von den Knoten-Discoverymodulen (6) von mehreren Knoten (2) erhaltenen Informationen zusammenführt, und/oder dass das Cluster-Erfassungsmodul (4) zum Erhalt der Informationen von dem oder den Knoten-Discoverymodulen (6) auf eine Cluster-Kontrollebene zugreift, wobei das Cluster-Erfassungsmodul (4) über die Cluster-Kontrollebene ermittelt, welche Knoten-Discoverymodule (6) im Cluster vorhanden sind und dieses oder diese kontaktiert und die Informationen abfragt.

15. Verfahren nach einem der Ansprüche 12 bis 14,
**dadurch gekennzeichnet, dass**
von dem Knoten-Discoverymodul (6) des oder des jeweiligen Knotens (2) Netzwerk-Stacks (12) des oder des jeweiligen Knotens (2) erfasst werden, indem eine Prozesstabelle des Betriebssystems des oder des jeweiligen Knotens (2) mit darin enthaltenen Verweisen auf von Prozessen zugeordneten Netzwerk-Stacks (12) ausgelesen und bevorzugt anschließend gegebenenfalls vorhandene Duplikate entfernt werden.

16. Verfahren nach einem der Ansprüche 12 bis 15,
**dadurch gekennzeichnet, dass**
von dem Knoten-Discoverymodul (4) des oder des jeweiligen Knotens (2) Netzwerk-Stacks (12) des oder des jeweiligen Knotens (2) erfasst werden, indem aktuell aktive Mounts des Betriebssystems des oder des jeweiligen Knotens (2) ausgelesen und bevorzugt nur diejenigen Einträge berücksichtigt werden, die das Namespace-Dateisystem betreffen.

17. Verfahren nach einem der Ansprüche 12 bis 16,
**dadurch gekennzeichnet, dass**
das Knoten-Erfassungsmodul (6) des oder des jeweiligen Knotens (2) in Schritt aa) Kennungen, insbesondere Namen der von dem Knoten-Erfassungsmodul (6) ermittelten Container (3) und/oder Kennungen, insbesondere Namen der von dem Knoten-Erfassungsmodul (6) ermittelten Pods (7) und/oder Kennungen, insbesondere Namen der von dem Knoten-Erfassungsmodul (6) ermittelten Netzwerk-Stacks (12) ermittelt.

18. Cluster (1) mit mehreren Arbeitsknoten (2),
wobei auf einem oder mehreren der Knoten (2) jeweils einer oder mehrere Container (3) vorhanden und/oder vorzusehen sind, und wobei einem oder mehreren der Knoten (2) ein Knoten-Erfassungsmodul (6) und dem Cluster (1) ein Cluster-Erfassungsmodul (4) zugeordnet ist,
wobei das Cluster-Erfassungsmodul über Informationen verfügt, welchen der Knoten (2) jeweils ein Knoten-Erfassungsmodul (6) zugeordnet ist, und welche Netzwerk-Stacks (12) der oder der jeweilige dieser Knoten (2) aufweist und welcher oder welche Container (3) und/oder Pods (7) auf dem oder dem jeweiligen dieser Knoten (2) vorhanden sind, und, sofern vorhanden, welcher Container (3) und/oder welcher Pod (7) des oder des jeweiligen dieser Knoten (2) welchem Netzwerk-Stack (12) des oder des jeweiligen dieser Knoten (2) zugeordnet ist,
und wobei das Cluster-Erfassungsmodul (4) dazu ausgebildet und/oder eingerichtet ist, von einem anfragenden Modul (9) Anfragen für das Erfassen von Datenpaketen an wenigstens einem Netzwerk-Stack (12) und/oder in wenigstens einem Container (3) und/oder Pod (7) eines oder mehrerer dieser Knoten (2), betroffener Knoten (2), zu empfangen wobei die jeweilige Anfrage eine dem wenigstens einen Netzwerk-Stack (12) zugeordnete Kennung und/oder eine dem wenigstens einen Container (3) und/der eine dem wenigstens einen Pod (7) zugeordnete Kennung umfasst, und um das Knoten-Erfassungsmodul (6) des oder des jeweils betroffenen Knotens (2) zu kontaktieren, und wobei das oder das jeweilige Knoten-Erfassungsmodul (6) dazu ausgebildet und/oder eingerichtet ist, auf eine Anfrage des Cluster-Erfassungsmoduls (4) hin Datenpakete an der oder den Netzwerkschnittstellen des wenigstens einen Netzwerk-Stacks (12), dessen Kennung in der Anfrage angegeben ist, zu erfassen, und/oder um Datenpakete an der oder den Netzwerkschnittstellen des wenigstens einen Netzwerk-Stacks (12), der dem wenigstens einen Container (3) und/oder dem wenigstens einen Pod (7), dessen Kennung in der Anfrage angegeben ist, zugeordnet ist, zu erfassen,
und das oder das jeweilige Knoten-Erfassungsmodul (6) dazu ausgebildet und/oder eingerichtet ist, die erfassten Datenpakete bzw. Duplikate (18) dieser an das Cluster-Erfassungsmodul (4) weiterzuleiten,
und wobei das Cluster-Erfassungsmodul (4) dazu ausgebildet und/oder eingerichtet ist, die erfassten Datenpakete bzw. Duplikate (18) dieser an das anfragende Modul (9) weiterzuleiten.

19. Cluster (1) mit mehreren Arbeitsknoten (2) insbesondere nach Anspruch 18, wobei auf einem oder mehreren der Arbeitsknoten (2) jeweils einer oder mehrere Container (3) vorhanden und/oder vorzusehen sind, wobei einem oder mehreren der Knoten (2) jeweils ein Knoten-Discoverymodul (5) zugeordnet ist, wobei das oder das jeweilige Knoten-Discoverymodul (5) dazu ausgebildet und/oder eingerichtet ist, den oder die Netzwerk-Stacks (12) des oder des jeweiligen Knotens (2) und Netzwerkschnittstellen des oder der Netzwerk-Stacks (12) des oder des jeweiligen Knotens (2) sowie auf dem oder dem jeweiligen Knoten (2) vorhandene Container (3) und/oder Pods (7) zu erfassen und, sofern Container (3) und/oder Pods (7) vorhanden sind, zu ermitteln, welcher Container (3) und/oder welcher Pod (7) des oder des jeweiligen Knotens (2) welchem Netzwerk-Stack (12) des oder des jeweiligen Knotens (2) zugeordnet ist,
und das Knoten-Discoverymodul (6) des oder des jeweiligen Knotens dazu ausgebildet und/oder eingerichtet ist, dem Cluster-Erfassungsmodul (4) diese Informationen bevorzugt auf Anfrage des Cluster-Erfassungsmoduls (4) hin zu übermitteln.

20. Computerprogramm umfassend Programmcode-Mittel, die bei der Ausführung des Programms auf wenigstens einem Computer den wenigstens einen Computer veranlassen, die Schritte des Verfahrens nach einem der Ansprüche 1 bis 167 durchzuführen.

21. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 17 durchzuführen.
